Europäisches Patentamt

(19) European Patent Office

Office européen des brevets

(11) Numéro de publication : **0 085 648 B1**

(12) **FASCICULE DE BREVET EUROPÉEN**

(45) Date de publication du fascicule du brevet :
09.10.85

(21) Numéro de dépôt : 83810015.4

(22) Date de dépôt : 13.01.83

(51) Int. Cl.⁴ : **G 04 C 13/11, H 02 K 37/00, H 02 P 8/00**

(54) **Moteur pas à pas à deux sens de rotation, notamment pour pièce d'horlogerie électronique, ainsi qu'ensemble le comprenant.**

(30) Priorité : 01.07.82 CH 4011/82
28.01.82 CH 517/82

(43) Date de publication de la demande :
10.08.83 Bulletin 83/32

(45) Mention de la délivrance du brevet :
09.10.85 Bulletin 85/41

(84) Etats contractants désignés :
DE FR GB

(56) Documents cités :
DE-A- 2 611 319
FR-A- 1 267 589
FR-A- 2 263 632
FR-E- 60 607
GB-A- 2 071 429
US-A- 3 626 263

(73) Titulaire : ASULAB S.A.
Faubourg du Lac 6
CH-2501 Bienne (CH)

(72) Inventeur : Remus, Hans-Jürgen
Avenue de Neuchâtel 56
CH-2024 St-Aubin (CH)
Inventeur : Antognini, Luciano
73, Chemin de Mourat
CH-1095 Lutry (CH)

(74) Mandataire : Barbeaux, Bernard et al
ASUAG Département Brevets et Licences Faubourg
du Lac 6
CH-2501 Bienne (CH)

## Description

La présente invention se rapporte aux moteurs pas à pas plus particulièrement destinés à être utilisés pour entraîner, par l'intermédiaire d'un train d'engrenages, des organes d'affichage, par exemple les aiguilles, d'une pièce d'horlogerie électronique. Elle concerne également les dispositifs de commande associés à ces moteurs.

La plupart des montres électroniques à affichage analogique conventionnelles sont munies d'un moteur pas à pas monophasé bipolaire, composé d'un rotor comprenant un aimant permanent, généralement cylindrique, à aimantation diamétrale, d'un stator formé de deux parties polaires qui entourent le rotor et sont réunies entre elles par des zones de haute réluctance constituées par des entrefers lorsque le stator est en deux pièces ou des isthmes dans le cas d'un stator en une seule pièce, et d'une bobine de commande entourant un noyau couplé magnétiquement au stator. Le stator est conformé de manière à créer pour le rotor un axe d'équilibre statique incliné d'un certain angle par rapport à l'axe joignant les entrefers ou les isthmes. Le rotor possède ainsi deux positions de repos déterminées, angulairement distantes de 180°.

A ce moteur est associé un circuit de commande qui, en réponse à des impulsions basse fréquence qu'il reçoit d'une base de temps comprenant un oscillateur à quartz et un diviseur de fréquence, produit et applique à la bobine de commande des impulsions motrices de polarité alternée qui font tourner le rotor par pas de 180° dans le sens correspondant au sens normal de rotation des aiguilles ou sens horaire. La durée de ces impulsions motrices, généralement de 7,8 ms, est choisie pour assurer un fonctionnement stable du moteur.

Un tel système présente un grave inconvénient. La recherche d'un rendement optimal pour le moteur impose de donner à l'angle que fait l'axe d'équilibre statique du rotor avec l'axe joignant les entrefers ou les isthmes une valeur d'environ 45° ce qui crée un déphasage d'autant entre les couples auquel est soumis le rotor, plus précisément le couple statique de positionnement dû au flux de l'aimant seul, qui définit les positions d'équilibre statique du rotor lorsque le moteur n'est pas alimenté en courant et le couple mutuel aimant-bobine dû à l'interaction entre le flux de l'aimant et le flux engendré par la bobine lorsqu'elle est parcourue par un courant. Un tel déphasage empêche de pouvoir inverser le sens de rotation du moteur simplement en inversant l'ordre des impulsions motrices positives et négatives qui lui sont appliquées lorsque la montre fonctionne normalement.

Cette non-réversibilité oblige à prévoir dans ces montres conventionnelles, pour la modification des informations à afficher telles que la correction de l'heure ou le changement de fuseau horaire, soit des dispositifs mécaniques qui permettent une correction de l'indication du temps dans les deux sens, avance et retard, mais qui sont encombrants, relativement complexes et le plus souvent de grande précision donc coûteux, soit des dispositifs électroniques n'assurant qu'une correction unidirectionnelle. Dans ce second cas le moteur est, lors d'une correction, alimenté par des impulsions dont la fréquence fixe ou dépendante de la vitesse d'actionnement d'un organe de commande manuel est nettement supérieure à celle qu'il reçoit en mode de fonctionnement normal. Toutefois, pour que le moteur puisse répondre à chacune des impulsions de correction, cette fréquence doit rester assez basse, généralement ne pas dépasser 32 ou 64 Hz, d'où des temps de correction qui peuvent être longs.

De nombreuses solutions ont été proposées pour résoudre ce problème avec des orientations différentes.

Une première possibilité consiste à mettre au point des moteurs spécialement conçus pour tourner dans les deux sens. Il existe par exemple des moteurs biphasés dont les deux bobines sont alimentées soit simultanément, soit successivement, qui ont un très bon rendement, fournissent un couple utile important et dont les domaines de fonctionnement en fréquence et/ou en tension sont très larges mais qui présentent deux inconvénients graves pour une application horlogère : ils sont plus encombrants et d'un prix de revient beaucoup plus élevé que les moteurs conventionnels.

Une autre possibilité consiste à continuer d'utiliser le même moteur sans le modifier et à lui adjoindre un dispositif de commande capable de produire et de lui appliquer des impulsions motrices adéquates pour le faire tourner dans le sens anti-horaire, soit directement à partir de sa position d'équilibre stable, à l'aide par exemple de deux impulsions successives de polarité différente, soit en soumettant le rotor à un mouvement de balancement. Dans ce dernier cas le moteur reçoit une première impulsion qui fait tourner le rotor dans le sens normal jusqu'à une certaine position. Lorsque le rotor a atteint cette position le dispositif de commande envoie au moteur une ou deux autres impulsions de durée et de polarité convenables dont l'énergie s'ajoute à celle acquise par le rotor lors de son mouvement dans le sens horaire et permet à celui-ci de tourner dans le sens inverse. La durée de la première impulsion peut être insuffisante pour que le moteur fasse un pas, mais prévue par exemple pour amener le rotor dans la position où il peut recevoir un couple inverse maximal lors de l'application de l'impulsion suivante ou bien être égale à celle des impulsions produites par le circuit de commande en régime de fonctionnement normal et permettre au rotor d'atteindre et de dépasser son autre position de repos, auquel cas il est possible de faire tourner ensuite celui-ci d'un tour complet dans le sens anti-horaire à l'aide d'une seconde et d'une troisième impulsions, respectivement de même signe et de signe opposé à celui de la première, la seconde impulsion débutant au moment où le rotor repasse par cette autre position de repos.

De tels systèmes permettent de continuer à bénéficier des avantages des moteurs traditionnels qui sont peu volumineux, simples et de faible coût tout en ayant un rendement et une consommation satisfaisants en régime de marche normale. Par contre les performances en marche arrière sont médiocres et le circuit de commande qui doit fournir des impulsions successives de polarités et souvent de durées différentes est nécessairement complexe. De plus, la plage et la sécurité de fonctionnement sont limitées par le fait qu'aux instants où les différentes impulsions sont appliquées, la position du rotor est mal définie en raison des variations des conditions de fonctionnement, notamment des modifications de charge, et des dispersions dues à la fabrication.

Une autre solution proposée dans le brevet américain 4 066 947 concernant un moteur avec stator en deux pièces, consiste à ramener l'angle entre l'axe joignant les entrefers et l'axe d'équilibre statique à une valeur comprise entre 30° et 0°, la limite supérieure qui correspond au couple de sortie le plus élevé en marche avant étant réservée à des moteurs susceptibles d'être soumis à une charge importante, par exemple d'entraîner un mécanisme de calendrier, la valeur inférieure étant au contraire choisie pour des charges faibles et pour obtenir les mêmes performances en marche avant et arrière. Un tel moteur peut être commandé dans les deux sens par des impulsions simples alternées de même durée ; il suffit d'inverser l'ordre des polarités. Il peut donc être associé à un circuit de commande simple. De plus les modifications par rapport à un moteur unidirectionnel sont minimes et n'entraînent pas d'augmentation du prix de revient. Cette solution présente toutefois plusieurs inconvénients : tout d'abord la possibilité de tourner dans les deux sens est obtenue au prix d'une nette diminution des performances en marche avant par rapport à celles du moteur unidirectionnel. Par ailleurs un tel moteur ne permet pas de concilier des performances proches en avant et en arrière avec un fonctionnement sûr car, au voisinage de 0° les positions de repos du rotor sont très mal définies malgré l'existence d'encoches dans les pièces polaires pour son positionnement et même en supposant qu'il n'existe aucune excentricité entre les deux parties du stator, ce qui est difficilement réalisable. Enfin il y a le risque d'une inversion du sens de rotation lorsque le rotor rate ou franchit accidentellement un pas.

Ces deux derniers inconvénients n'existent plus dans un autre moteur connu à stator symétrique dans lequel le couple de positionnement $\pi$-périodique est remplacé par un couple d'indexage produit par un aimant permanent placé au voisinage de l'un des entrefers. Le rotor qui n'a plus alors qu'une seule position de repos tourne chaque fois de 360° sous l'effet de deux impulsions successives de polarités opposées, l'ordre de succession des polarités de ces deux impulsions déterminant le sens de rotation d'où l'inconvénient d'un circuit de commande relativement compliqué qui s'ajoute à une augmentation du prix de revient du fait de la présence d'un aimant supplémentaire.

La présente invention a notamment pour but de fournir un moteur pas à pas réversible permettant d'éliminer, tout au moins en grande partie, les inconvénients de ces diverses solutions connues.

Ce but est atteint, dans le moteur réversible selon l'invention qui comprend un stator dans lequel est ménagé un évidement central délimité par une paroi interne, une bobine couplée magnétiquement au stator pour créer dans celui-ci un champ magnétique en réponse à une impulsion motrice, un rotor monté à rotation autour d'un axe dans l'évidement central et comportant un aimant permanent ayant au moins une paire de pôles magnétiques opposés qui définissent un axe d'aimantation, et des moyens de positionnement pour assurer au rotor deux positions de repos dans lesquelles cet axe d'aimantation est dirigé suivant un axe d'équilibre statique, le stator comprenant une première et une seconde parties polaires opposées qui entourent partiellement le rotor grâce au fait que ces parties polaires sont reliées entre elles de part et d'autre de ce rotor grâce à une première partie intermédiaire et une première et une seconde parties de raccordement entre cette première partie intermédiaire et respectivement la seconde et la première parties polaires et à une seconde partie intermédiaire et une troisième et une quatrième partie de raccordement entre cette seconde partie intermédiaire et respectivement la première et la seconde parties polaires, que les moyens de positionnement sont prévus pour que l'axe d'équilibre statique coupe les parties intermédiaires et que les parties de raccordement sont conçues pour que deux au moins d'entre elles qui joignent la première et la seconde parties intermédiaires respectivement à l'une et à l'autre des parties polaires aient leur perméabilité qui chute entre l'instant où une impulsion motrice est appliquée à la bobine et celui où le rotor commence à tourner.

Avantageusement les première et troisième parties de raccordement, respectivement les seconde et quatrième parties de raccordement, sont situées sensiblement symétriquement par rapport à l'axe de rotation du rotor, dans une direction inclinée par rapport à l'axe d'équilibre statique d'un angle compris entre 30° et 60°, de préférence sensiblement égal à 40°, dans un sens correspondant à un premier, respectivement un second sens de rotation du rotor.

Par ailleurs il est préférable que les parties de raccordement soient conçues pour que la première et la troisième soit saturées en flux magnétique, c'est-à-dire que leur perméabilité atteigne pratiquement celle du vide, lorsque la bobine engendre dans le stator, en réponse à une impulsion motrice, un champ magnétique permettant de faire tourner le rotor dans le premier sens de rotation.

Il est également souhaitable que, lorsque la bobine crée dans le stator un champ magnétique permettant de faire tourner le rotor dans son second sens de rotation, soit les seconde et quatrième parties de raccordement, soit, ici encore, la première et la troisième soient saturées en flux magnétique.

Dans le premier cas les parties de raccordement peuvent être prévues pour que le temps que mettent les seconde et quatrième parties de raccordement pour atteindre la saturation soit à peu près le même que celui qui est nécessaire pour que les deux autres se saturent lorsque le rotor est amené à tourner dans le premier sens, auquel cas le moteur serait symétrique et aurait théoriquement les mêmes performances dans les deux sens ; toutefois il est avantageux que ce temps de saturation des seconde et quatrième parties de raccordement soit supérieur à l'autre.

Une façon simple pour mettre en œuvre l'invention est de réaliser le stator en une seule pièce d'épaisseur à peu près constante en un matériau de haute perméabilité magnétique et de prévoir des isthmes sensiblement de même largeur au moins comme première et troisième parties de raccordement.

Les seconde et quatrième parties de raccordement peuvent alors être aussi constituées par des isthmes qui, dans le cas d'un moteur symétrique, ont une largeur égale à celle des deux autres et, dans le cas contraire, une largeur deux à quatre fois, de préférence environ trois fois, supérieure.

Il est également possible de réaliser, d'une part, la première partie intermédiaire et la seconde partie de raccordement et, d'autre part, la seconde partie intermédiaire et la quatrième partie de raccordement de façon qu'elles forment deux portions de stator dont la largeur qui peut être à peu près constante ou croissante à partir des isthmes qui constituent les première et troisième parties de raccordement, restent avantageusement comprise entre deux et quatre fois celle de ces isthmes.

Le moteur selon l'invention est capable de réaliser de bonnes performances en marche avant comme en marche arrière tout en étant commandé dans les deux sens par les mêmes impulsions simples de polarité alternée qu'un moteur unidirectionnel classique, le sens de rotation du rotor étant normalement déterminé par l'ordre de succession des polarités de ces impulsions.

Il peut par ailleurs être conçu sous une forme simple peu encombrante et peu coûteuse. Toutefois il continue à présenter l'un des inconvénients de certains moteurs bidirectionnels connus : celui d'une possibilité d'inversion du sens de rotation lorsque le rotor ne franchit pas normalement son pas ou, au contraire, passe accidentellement d'une position de repos à l'autre.

L'invention a également pour but de résoudre ce problème.

Ce but est facilement atteint en choisissant de réaliser le moteur sous forme asymétrique et en lui associant un dispositif de commande qui comprend classiquement des moyens générateurs de signaux pour produire des signaux à la fréquence d'entraînement du moteur, un circuit formateur d'impulsions couplé aux moyens générateurs de signaux pour fournir des impulsions de commande normales et un circuit de commande pour délivrer normalement à la bobine du moteur, en réponse auxdites impulsions de commande normales et à un signal de commande de sens de rotation, des impulsions motrices normales bipolaires dans un ordre de succession correspondant au sens dans lequel le rotor du moteur doit tourner, mais qui comporte également des moyens pour déterminer le sens de rotation du rotor qui comparent à un instant déterminé après le début de chaque impulsion motrice normale la valeur du courant dans la bobine à une valeur de seuil et fournissent un signal représentatif du sens dans lequel cette impulsion tend à faire tourner le rotor, des moyens de comparaison pour comparer le signal fourni par les moyens de détermination du sens de rotation au signal de commande de sens de rotation et délivrer un signal de commande de correction lorsque le sens de rotation est incorrect, et des moyens répondant au signal de commande de correction pour interrompre l'impulsion motrice normale et commander l'application d'une impulsion motrice de correction afin de faire tourner le rotor dans le sens imposé par le signal de commande de sens de rotation.

Avantageusement le circuit de commande est conçu pour que l'application d'une impulsion motrice de correction provoque l'inversion de l'ordre de succession des polarités pour les impulsions motrices normales suivantes.

En outre la comparaison entre le courant dans la bobine et la valeur de seuil se fait de préférence avant que le rotor ait commencé à tourner sous l'effet de l'impulsion motrice normale.

L'ensemble moteur ainsi obtenu est très fiable et, de plus, économique car, comme le moteur, le dispositif de commande peut être réalisé sous une forme très simple.

L'invention sera mieux comprise grâce à la description qui suit faite en référence aux dessins annexés dans lesquels :

— la figure 1 est une vue schématique en plan d'un moteur pas à pas monophasé bipolaire conventionnel à stator en une seule pièce ;

— la figure 2 est un diagramme montrant les variations, en fonction de la position angulaire positionnement du rotor et du couple mutuel aimant-bobine obtenus avec le moteur représenté à la figure 1 lorsqu'il est alimenté par des impulsions motrices simples de polarité alternée permettant de le faire tourner normalement ainsi que les couples qui seraient obtenus si le moteur recevait le même type d'impulsions mais de polarité inversée par rapport aux précédentes ;

— la figure 3 est une vue schématique en plan d'une première forme de réalisation du moteur pas à pas selon l'invention ;

— les figures 4 et 5 sont des diagrammes montrant des courbes de perméabilité relative et de saturation et permettant d'expliquer le fonctionnement du moteur représenté à la figure 3 ;

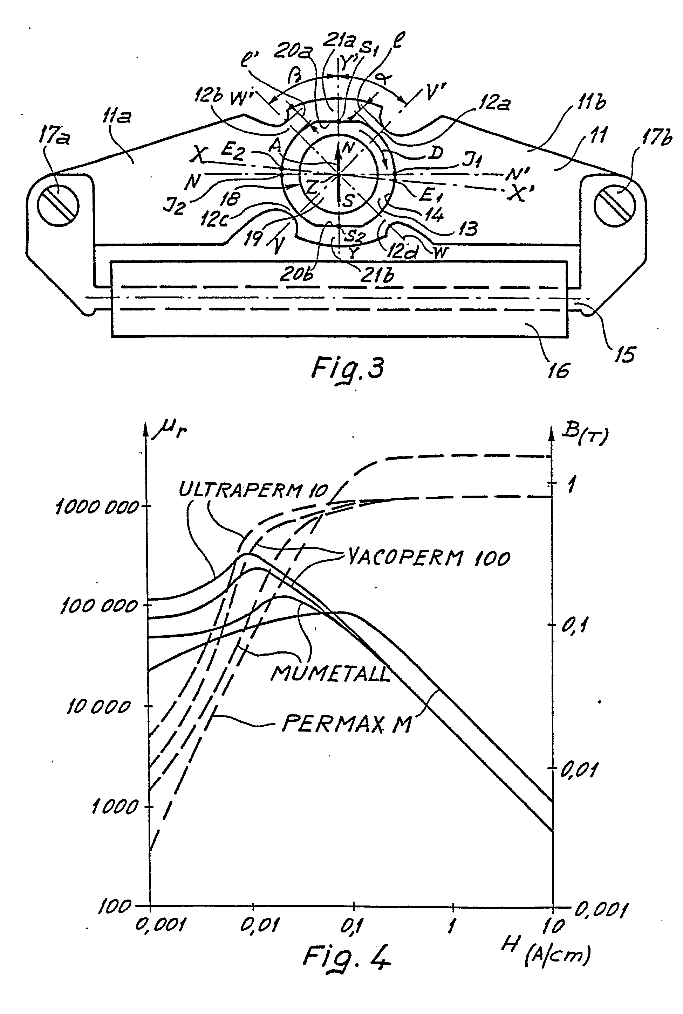

— les figures $6_a$ et $6_b$ sont des schémas qui montrent la répartition des flux magnétiques de la bobine et de l'aimant dans le stator au voisinage de l'évidement central dans le cas où le moteur fonctionne en marche avant, respectivement en marche arrière, et qui permettent également d'expliquer le fonctionnement du moteur de la figure 3 ;

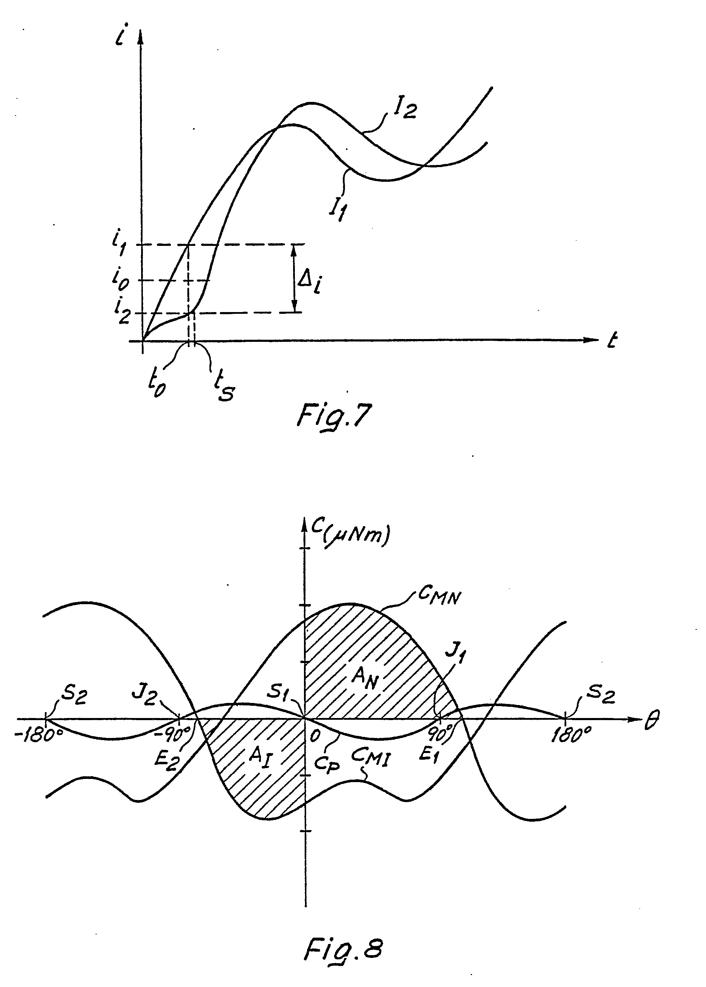

— la figure 7 est un diagramme montrant la différence de forme du courant dans la bobine du moteur de la figure 3 selon que le rotor est amené à tourner dans un sens ou dans l'autre ;

— la figure 8 est un diagramme représentant les variations, en fonction de la position angulaire θ du rotor, du couple de positionnement et du couple mutuel aimant-bobine obtenu avec le moteur de la figure 3 pour chaque sens de rotation ;

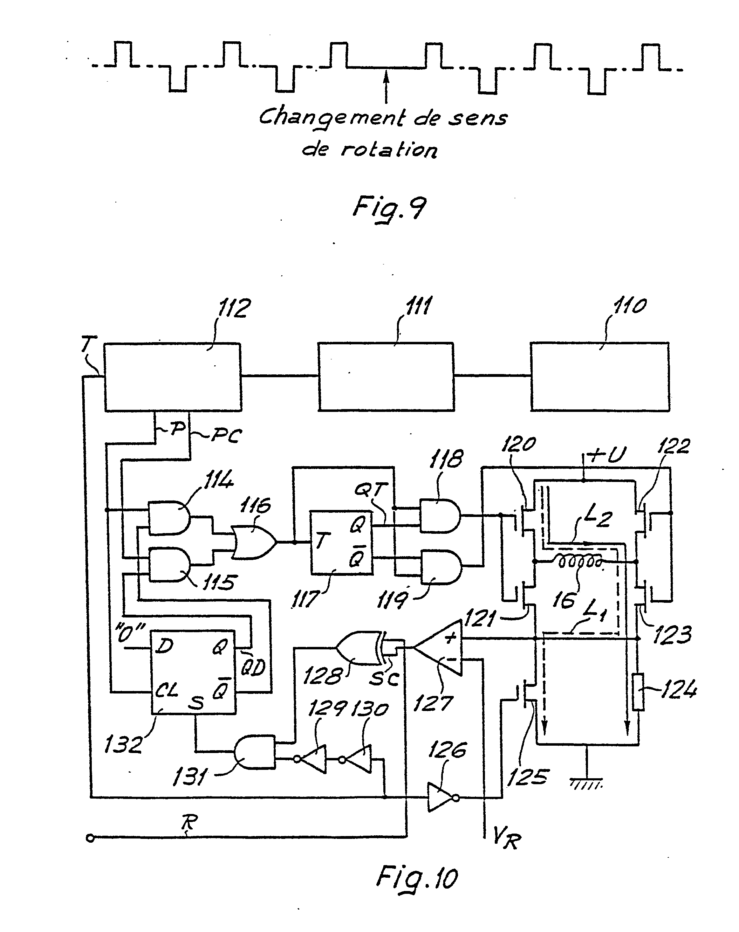

— la figure 9 montre les impulsions motrices simples qui peuvent être utilisées pour commander le moteur de la figure 3 en marche avant et en marche arrière ;

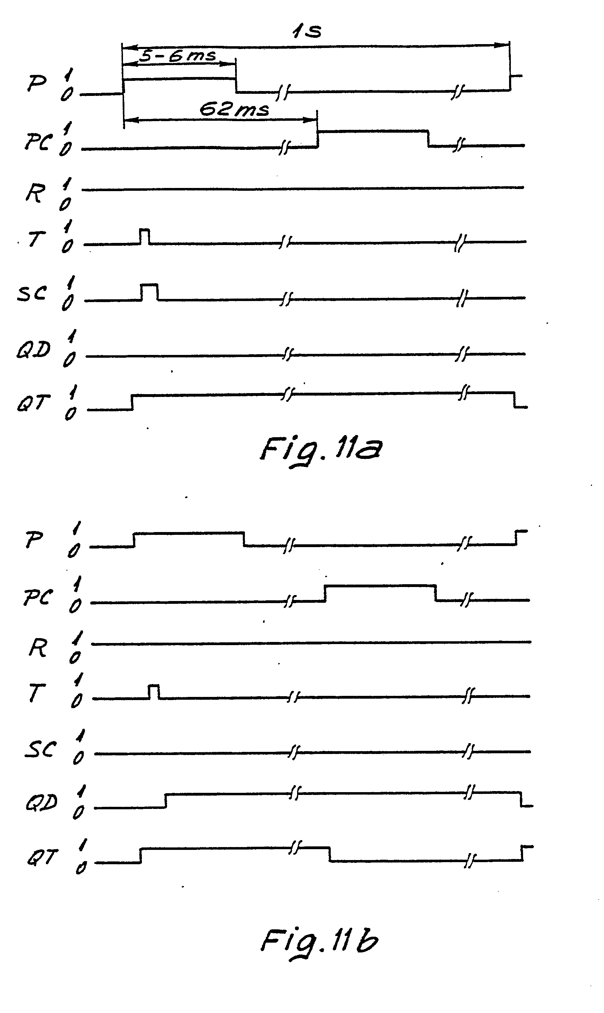

— la figure 10 est le schéma d'un exemple de dispositif de commande pouvant être associé à un moteur pas à pas selon l'invention ;

— les figures $11_a$ et $11_b$ sont des diagrammes représentant la forme des signaux apparaissant en différents points du dispositif de commande de la figure 10 ;

— les figures 12 à 15 sont des vues schématiques partielles en plan de quatre autres modes possibles de réalisation du moteur pas à pas selon l'invention ;

— la figure 16 montre schématiquement et partiellement en plan une variante possible pour les moteurs des figures 3 et 12 à 15, représentée dans le cas du mode de réalisation de la figure 3 ; et

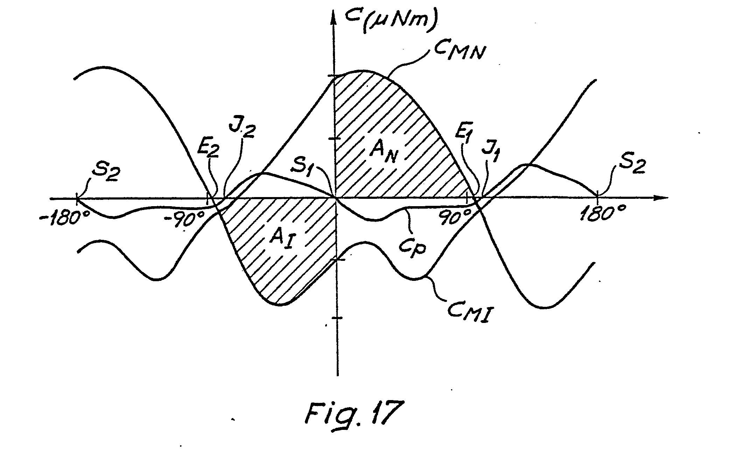

— la figure 17 est un diagramme analogue à celui de la figure 8 montrant les couples obtenus avec le moteur de la figure 16.

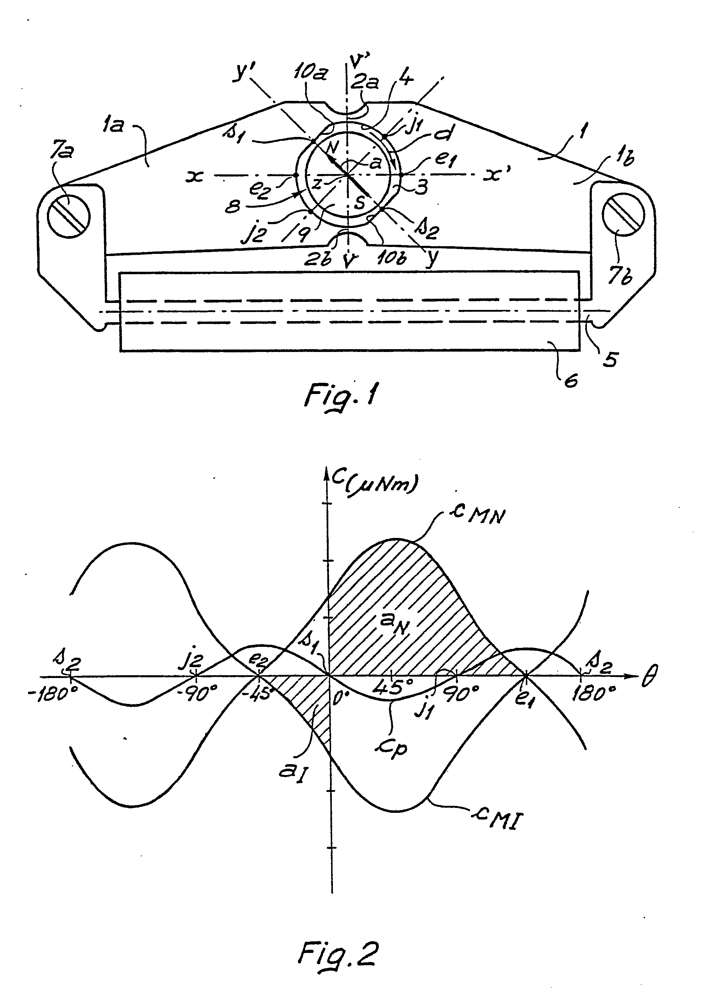

La figure 1 représente schématiquement un mode possible de réalisation d'un moteur monophasé bipolaire classique à stator en une seule pièce.

Ce moteur comporte un stator 1 d'épaisseur sensiblement constante, réalisé en un matériau magnétique doux et comprenant deux parties principales ou parties polaires $1_a$, $1_b$ relativement massives, reliées entre elles par des parties rétrécies ou isthmes $2_a$ et $2_b$ de façon à ménager un évidement central 3 qui a essentiellement la forme d'un cylindre de révolution. Le stator 1 est couplé magnétiquement à une pièce 5, également en matériau magnétique doux, qui constitue le noyau d'une bobine 6. Le stator 1 et le noyau 5 sont assemblés par les vis $7_a$ et $7_b$.

Un rotor 8 comprenant un aimant permanent cylindrique 9 à aimantation diamétrale est logé dans l'évidement central 3 de manière à pouvoir tourner autour d'un axe z coïncidant avec l'axe de cet évidement.

Enfin, la paroi interne 4 du stator qui délimite l'évidement central 3 présente deux plats $10_a$, $10_b$ de même dimension, diamétralement opposés, qui permettent d'imposer au rotor 8 deux positions de repos dans lesquelles l'axe d'aimantation a de l'aimant est dirigé suivant un axe d'équilibre statique yy' sensiblement perpendiculaire à ces plats et faisant avec la droite vv' qui joint les isthmes $2_a$, $2_b$ un angle d'environ 45°.

En l'absence de courant dans la bobine 6, le rotor 8 occupe l'une de ses positions de repos, par exemple celle représentée sur la figure et repérée par le point $s_1$, pour laquelle le pôle Nord de l'aimant se trouve en regard du plat $10_a$, situé du côté de la pièce polaire $1_a$. Une partie du flux magnétique créé par l'aimant s'écoule par le noyau 5 de la bobine, tandis que l'autre partie qui se divise en deux reste au voisinage de l'évidement 3 et passe par les isthmes $2_a$, $2_b$ qui ne sont alors normalement pas saturés, au sens de la définition de la non-saturation et de la saturation qui sera donnée par la suite.

Lorsqu'une impulsion motrice, par exemple positive, est appliquée à la bobine pour faire tourner le rotor 8 dans le sens normal de rotation indiqué par la flèche d, le courant qui circule dans cette bobine engendre un flux magnétique qui, tout au début de l'impulsion, parcourt le circuit magnétique constitué par le stator 1 et le noyau 5. La majeure partie de ce flux va de la première pièce polaire $1_a$ à la seconde $1_b$ en passant par les isthmes $2_a$, $2_b$ dans lesquels il s'additionne au flux de l'aimant 9, le reste en s'écoulant dans l'air, au voisinage des rétrécissements.

La réluctance $R_{bb}$ du circuit magnétique vue de la bobine, est alors très faible. De ce fait la constante de temps τ du circuit série comprenant la résistance R et l'inductance L de la bobine donnée par la formule $\tau = L/R = N^2/RR_{bb}$ où N représente le nombre de spires de la bobine, est alors très élevée et le courant croît lentement.

Au fur et à mesure que le courant dans la bobine et, par conséquent, le flux créé par celle-ci augmentent, les isthmes se rapprochent de la saturation, leur perméabilité diminuant très rapidement. Une partie du flux engendré par la bobine commence alors à pénétrer dans l'évidement central 3 et à traverser l'aimant. Lorsque, au bout d'un temps en réalité très court après le début de l'impulsion motrice, le courant atteint une certaine valeur, les isthmes sont complètement saturés et se comportent alors comme des entrefers, leur perméabilité atteignant pratiquement celle $\mu_0$ de l'air. La constante de temps τ étant alors devenue très faible le courant se met à augmenter très rapidement. Lorsque le flux à travers l'aimant devient suffisant le rotor est entraîné en rotation et tourne de 180° pour venir occuper son autre position de repos indiquée par le point $s_2$.

La figure 2 montre les valeurs des couples qui agissent sur le rotor en fonction de son angle de rotation θ repéré par rapport à la position de

repos $s_1$ dans laquelle il est représenté sur la figure 1.

La courbe $c_p$ représente le couple de positionnement dû à l'aimant seul, dont la période est de 180° et qui définit les positions de repos $s_1$ (0°) et $s_2$ (180°) du rotor pour lesquelles il s'annule. Du fait de la forme cylindrique de l'aimant, le couple $c_p$ est pratiquement sinusoïdal. Les points $j_1$ et $j_2$ (± 90°) pour lesquels ce couple prend également la valeur zéro, correspondent à des positions d'équilibre statique instable (voir également la figure 1).

L'autre couple auquel est soumis le rotor est le couple mutuel aimant-bobine $c_{MN}$ dû à l'interaction du flux de l'aimant avec celui engendré par la bobine. Ce couple $c_{MN}$ présente également une forme à peu près sinusoïdale, sa période étant de 360°. Il est par ailleurs déphasé par rapport au couple de positionnement $c_p$ d'un angle d'environ 45°, c'est-à-dire qu'il est maximal lorsque l'axe d'aimantation a de l'aimant se trouve dans la direction vv' joignant les isthmes $2_a$, $2_b$.

A noter que, dans un but de simplification, il a été fait abstraction du couple résistant, somme des couples de frottement et de charge dus aux organes mécaniques que le moteur doit entraîner et qui a notamment pour effet de décaler les positions d'équilibre statique du rotor par rapport à celles indiquées sur les figures 1 et 2.

L'action du couple mutuel aimant-bobine dépend de la durée de l'impulsion motrice et, pour une durée donnée, du temps que met le rotor pour franchir un pas, c'est-à-dire de sa charge.

Si, par exemple, l'impulsion est maintenue jusqu'à ce que le couple mutuel s'annule, c'est-à-dire jusqu'à ce que le rotor ait atteint la position pour laquelle le flux magnétique total à travers l'aimant, ainsi que dans le noyau de la bobine est maximal, le rotor est tout d'abord amené de sa position de repos $s_1$ à la position d'équilibre instable $j_1$ grâce au couple mutuel $c_{MN}$, alors très supérieur au couple du positionnement $c_p$ qui s'oppose à ce mouvement puis, sous l'action conjuguée du couple mutuel et du couple de positionnement devenu positif. Le rotor poursuit ensuite sa course grâce à l'énergie cinétique acquise et au couple de positionnement. Si, par contre, l'impulsion motrice est maintenue après que le rotor ait atteint la position $e_1$, par exemple jusqu'à ce que le rotor ait tourné de 180°, le couple mutuel devient au-delà de ce point $e_1$ un couple de freinage.

Par ailleurs, le diagramme montre qu'en fait le rotor reçoit l'essentiel de l'énergie qui peut lui être communiquée et qui est représentée par la surface hachurée $a_N$ située sous la courbe $c_{MN}$, entre les points $s_1$ et $j_1$. Il est donc possible, en vue notamment de réduire la consommation du moteur, d'interrompre l'impulsion motrice appliquée à la bobine avant que le rotor ait atteint la position $e_1$ et même le point $j_1$. Il suffit dans ce cas de prévoir une durée d'impulsion suffisante pour que le rotor puisse emmagasiner une énergie cinétique qui permette tout d'abord de vaincre le couple positionnement $c_p$ auquel il faut ajouter en pratique le couple résistant, ceci jusqu'au point $j_1$, puis qui aide le couple de positionnement à surmonter le couple résistant pour amener le rotor dans sa position de repos $s_2$.

Lorsque la bobine reçoit par la suite une impulsion motrice de polarité opposée à celle de la précédente, c'est-à-dire négative, le moteur fonctionne de la même manière, le sens des flux d'induction magnétique étant alors inversé. Le rotor tourne à nouveau de 180° dans le même sens d pour venir occuper la position de repos qui était la sienne avant l'apparition de la première impulsion. Les positions caractéristiques intermédiaires du rotor sont alors les points $j_2$ et $e_2$ opposés respectivement à $j_1$ et $e_1$.

La figure 2 montre également le couple mutuel aimant-bobine $c_{MI}$ qui serait obtenu si, le rotor occupant sa position de repos $s_1$, on appliquait au moteur une impulsion de même amplitude, mais négative, c'est-à-dire de polarité opposée à celle permettant de faire tourner le rotor dans le sens normal d. La courbe $c_{MI}$ est symétrique de la courbe $c_{MN}$ par rapport à l'axe des abscisses θ. Le couple de positionnement demeure inchangé.

On constate que le rotor ne peut être soumis à un couple mutuel moteur qu'entre le point $s_1$ et le point $e_2$ opposé au point $e_1$ sur l'axe xx' (figure 1), c'est-à-dire sur un angle d'environ 45°. Par ailleurs, la valeur de ce couple $c_{MI}$ ne fait que décroître entre 0° où elle est déjà faible et − 45°. Il s'ensuit que l'énergie que peut recevoir le rotor et qui est représentée sur le graphique par la surface hachurée $a_I$ est très insuffisante pour lui permettre de franchir un pas dans le sens inverse au sens normal. Dans le meilleur des cas, le rotor s'écartera faiblement de sa position de repos $s_1$ pour y revenir ensuite. Souvent, le couple mutuel $c_{MI}$ sera insuffisant pour vaincre le couple de positionnement ainsi que le couple résistant et le rotor restera immobile. Il n'est donc pas possible de faire tourner le rotor dans le sens inverse à son sens normal de rotation, simplement en inversant la polarité des impulsions motrices.

Une solution pour arriver à cela consisterait à faire ici la même chose que ce qui est préconisé par le brevet américain n° 4 066 947 dans le cas d'un stator en deux pièces, c'est-à-dire de réduire l'angle entre l'axe d'équilibre statique yy' et la droite vv' sur laquelle se situent les isthmes, ce qui reviendrait à translater les couples mutuels $c_{MM}$ et $c_{MI}$ parallèlement à l'axe des abscisses dans le sens des angles décroissants. Il suffirait pour cela de modifier la position des plats $10_a$ et $10_b$ (fig. 1). Toutefois, on peut voir, en considérant la figure 2, qu'une telle solution ne serait pas très satisfaisante. Le fait de ramener la valeur de l'angle à par exemple 30° pour conserver une sécurité de fonctionnement et des performances acceptables dans le sens normal de rotation, n'entraînerait qu'une faible augmentation de la surface $a_I$. A l'opposé, choisir un angle nul, c'est-à-dire réaliser un moteur parfaitement symétrique, équivaudrait à réduire considérablement l'énergie motrice représentée par la surface $a_N$ pour le sens normal de rotation ou sens horaire, et à obtenir pour chaque sens de rotation un couple mutuel maximal au démarrage et sans cesse décroissant, ce qui n'est pas favorable à un bon fonctionnement du moteur. Les performances seraient alors insatisfaisantes dans les deux sens.

En fait, ce qui est souhaitable, c'est de pouvoir obtenir pour la marche arrière comme pour la marche avant, un couple mutuel conservant une valeur élevée tant que le rotor n'a pas tourné d'un angle d'au moins une quarantaine de degrés et qui présente, de préférence, un maximum lorsque le rotor a déjà quitté sa position de repos, c'est-à-dire de se rapprocher le plus possible de ce qui est réalisé dans le cas du moteur conventionnel lorsqu'il est entraîné dans son sens normal de rotation.

Ces conditions qui permettent d'assurer de bonnes performances du moteur dans les deux sens de rotation et de limiter la perte de puissance en marche avant au bénéfice de celle en marche arrière, qui est inévitable lorsque le moteur est commandé par les mêmes impulsions simples dans les deux sens, sont remplies par le moteur selon l'invention dont un premier mode possible de réalisation est représenté à la figure 3.

Ce moteur comporte, comme le moteur conventionnel de la figure 1, un stator 11 en une seule pièce, d'épaisseur sensiblement constante, fixé par des vis $17_a$ et $17_b$ au noyau 15 d'une bobine 16 et un rotor 18 muni d'un aimant permanent cylindrique 19 à aimantation diamétrale monté à rotation autour d'un axe Z dans un évidement central 13 que présente le stator 11. Cet évidement est ici encore délimité par une paroi interne 14 en forme de cylindre de révolution d'axe confondu avec l'axe Z de rotation du rotor 18, sauf en deux zones diamétralement opposées, où elle est constituée par des plats $20_a$ et $20_b$ pour assurer au rotor 18 deux positions de repos dans lesquelles l'axe d'aimantation A est dirigé suivant l'axe d'équilibre statique YY'.

Le stator 11 est réalisé, comme le noyau 15, en un matériau magnétique doux choisi, par exemple, parmi les alliages connus sous les dénominations de « ULTRAPERM 10 », « VACOPERM 100 », « MUMETALL » ou « PERMAX M » et dont la perméabilité relative peut atteindre, et même pour certains dépasser largement, la valeur 100000.

A la différence du moteur de la figure 1, les première et seconde parties polaires massives $11_a$ et $11_b$ que comprend le stator 11 et qui sont situées ici de part et d'autre de l'axe YY' n'entourent que partiellement le rotor 18 et sont reliées entre elles par une première et une seconde partie intermédiaire $21_a$ et $21_b$ ainsi que par quatre parties de raccordement constituées dans ce mode de réalisation par des isthmes $12_a$, $12_b$, $12_c$ et $12_d$. Plus précisément, un premier isthme, $12_a$, et un second, $12_b$, forment les jonctions entre la première partie intermédiaire $21_a$ et

respectivement la première, $11_a$, et la seconde, $11_b$, partie massive tandis qu'un troisième isthme, $12_c$, et un quatrième, $12_d$, raccordent la seconde partie intermédiaire $21_b$ respectivement à la première et à la seconde partie polaire. Les premier et troisième isthmes $12_a$, $12_c$ sont par ailleurs situés à peu près symétriquement par rapport à l'axe Z de rotation du rotor 18 dans une direction VV' faisant avec l'axe d'équilibre statique YY' un angle a compris entre 30° et 60°, de préférence sensiblement égal à 40°. Il en est de même pour les deuxième et quatrième parties de raccordement $12_b$ et $12_d$ qui se trouvent dans une direction WW'.

Enfin, les deux isthmes $12_a$, $12_c$, situés dans la direction VV' qui est décalée angulairement par rapport à l'axe YY' dans le sens horaire correspondant à celui dans lequel le rotor sera amené à tourner le plus souvent et où le moteur devra, de préférence, présenter les meilleures performances et qui est indiqué par la flèche D, ont une largeur commune l suffisamment faible pour pouvoir être pratiquement immédiatement et totalement saturés en flux magnétique lorsque la bobine reçoit une impulsion motrice permettant de faire tourner le rotor dans ce sens horaire. Les deux autres isthmes $12_b$, $12_d$ ont une largeur l' supérieure à l, la valeur du rapport l'/l étant comprise entre 2 et 4, de préférence sensiblement égale à trois.

La justification de cette dissymétrie apparaîtra clairement par la suite.

A noter que, du point de vue fabrication, le moteur qui vient d'être décrit est très proche du moteur conventionnel de la figure 1. Les différences qui existent n'ont pratiquement pas de conséquences en ce qui concerne le temps et le coût d'usinage du stator et les prix de revient sont à peu près les mêmes dans les deux cas.

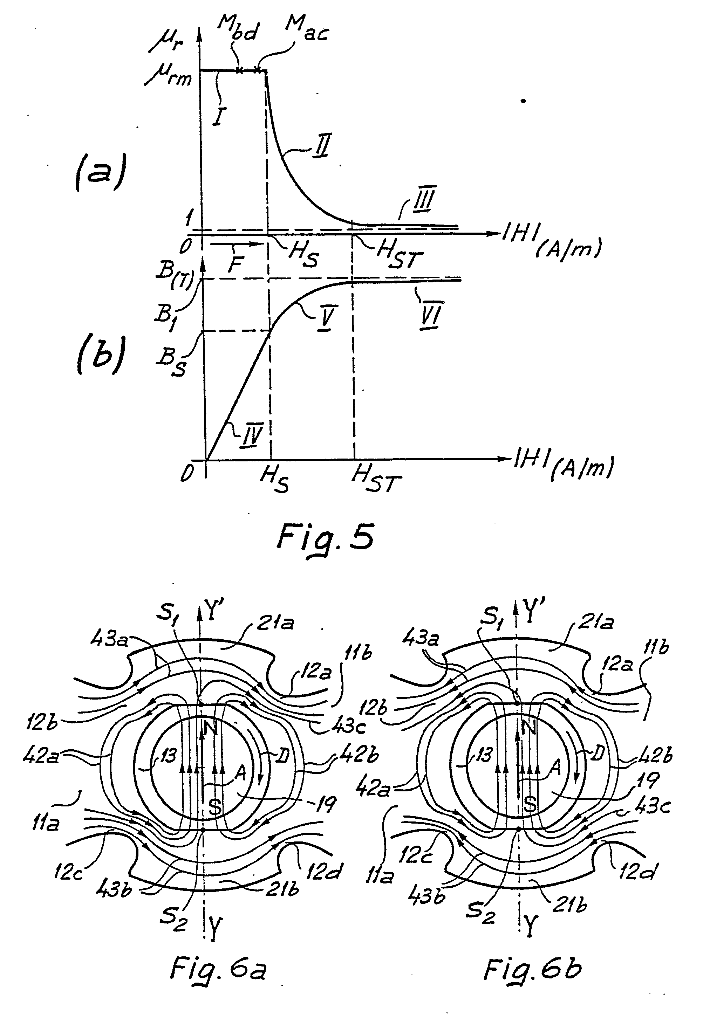

Le fonctionnement du moteur de la figure 3 va maintenant être expliqué à l'aide des figures 4 à 8, principalement en ce qui concerne la phase statique qui se situe entre l'instant où une impulsion motrice est appliquée à la bobine et celui où le rotor commence à tourner.

Il est bien connu que, dans un milieu ferromagnétique, l'induction magnétique B est liée au champ magnétique H par la relation très générale

$$B (H) = \mu_o \mu_r (H) H + B_R$$

où $\mu_o$ désigne toujours la perméabilité du vide, $\mu_r$ la perméabilité relative du milieu qui est fonction du champ magnétique et $B_R$ l'induction rémanente.

La forme des courbes $\mu_r (H)$ et $B (H)$, de même que les valeurs que peuvent prendre la perméabilité relative et l'induction magnétique sont souvent nettement différentes d'un matériau à l'autre. Ceci est illustré par la figure 4 qui montre, pour un certain domaine de valeurs du champ magnétique H et pour chacun des quatre alliages susmentionnés, la caractéristique $\mu_r (H)$ et la courbe de saturation B (H) représentées respectivement par une ligne continue et une ligne discontinue.

Du fait de ces différences il est préférable, pour expliquer clairement le fonctionnement du moteur, de ne pas se référer à des courbes réelles et de choisir une représentation approchée de la variation de la perméabilité relative et de l'induction magnétique, valable avec une bonne approximation pour l'ensemble des matériaux qui peuvent actuellement être utilisés pour la fabrication des stators de moteurs pas à pas.

Parmi les modèles qui ont été proposés jusqu'à maintenant pour simuler les courbes $\mu_r$ (H) et B (H), celui qui a été retenu est montré à la figure $5_a$ pour ce qui concerne la perméabilité relative et à la figure $5_b$ pour ce qui est de l'induction magnétique. A noter que, à la différence de la figure 4, la forme des courbes des figures $5_a$ et $5_b$ correspond à un tracé avec des échelles décimales et non pas logarithmiques, sur les différents axes mais que ces échelles n'ont en fait pas été respectées. Il faut remarquer également que ces courbes sont valables pour un matériau non rémanent ou pour lequel le phénomène d'hystérésis peut être négligé, ce qui signifie que le terme $B_R$ de l'équation ci-dessus est nul ou peut être considéré comme tel. Par ailleurs on constate que la perméabilité relative et l'induction ont été représentées en fonction de l'amplitude |H| du champ magnétique. Pour obtenir des courbes complètes, c'est-à-dire qui permettent également de tenir compte du sens du champ magnétique, il suffirait d'effectuer une symétrie par rapport à l'axe des ordonnées en ce qui concerne $\mu_r$ et par rapport à l'origine des coordonnées pour l'induction B.

La courbe $\mu_r$ (|H|) de la figure $5_a$ se compose de trois portions : une première portion I où la perméabilité relative reste constante et égale à une valeur maximale $\mu_{rm}$ lorsque l'amplitude du champ magnétique passe de la valeur zéro à une valeur $H_S$, une seconde portion II constituée par une partie d'hyperbole, où la perméabilité décroît très rapidement jusqu'à une valeur très faible, proche de l'unité, lorsque le champ croît de la valeur $H_S$ à une valeur $H_{ST}$, et une troisième portion III formée par une droite pratiquement parallèle à l'axe des abscisses, $\mu_r$ tendant alors vers la valeur 1.

La courbe de saturation B (|H|) est également divisée en trois parties qui correspondent naturellement aux trois portions de la caractéristique $\mu_r$ (|H|). La perméabilité relative étant considérée comme constante entre les valeurs zéro et $H_S$ du champ, l'induction magnétique est, dans ce domaine, proportionnelle à |H|. La première partie IV de la courbe est donc constituée par une droite joignant l'origine au point de coordonnées $H_S$ et $B_S$. La deuxième partie, comprise entre les valeurs $H_S$ et $H_{ST}$ du champ est une portion de parabole tandis que la troisième partie VI qui s'étend au-delà de la valeur $H_{ST}$ est formée par une droite à très faible pente, l'induction magnétique tendant alors vers une valeur $B_1$ qui correspond à la valeur 1 de la perméabilité relative.

Il est important d'indiquer que cette façon de simuler les caractéristiques de perméabilité et de saturation peut également être adoptée pour des matériaux rémanents. Dans ce cas les portions de courbes seront encore des droites, hyperbole et parabole mais dont les équations seront un peu moins simples que pour un milieu non rémanent.

Par ailleurs, étant donné qu'il existe plusieurs définitions possibles de la limite entre l'état de non-saturation et de saturation en flux d'un milieu, il est nécessaire de préciser que dans tout ce qui suit, on parlera de zone non saturée lorsque le point de fonctionnement de cette zone sur la caractéristique $\mu_r$ (|H|) se situera sur la première portion I de la courbe. Au contraire une région sera qualifiée de totalement saturée ou plus simplement de saturée quand son point de travail se trouvera sur la troisième portion III de cette courbe, c'est-à-dire quand sa perméabilité sera pratiquement égale à celle du vide. La partie hyperbolique II correspondra à un état de saturation partielle.

En l'absence de courant dans la bobine 16, le rotor 18 se trouve dans l'une de ses positions de repos, par exemple celle qui est représentée sur la figure 3 et repérée par le point $S_1$. Chacun des isthmes $12_a$ à $12_d$ n'est alors traversé que par une partie du $\Phi_A$ de l'aimant 19 comme le montrent schématiquement les lignes d'induction $42_a$ et $42_b$, représentées sur les figures $6_a$ et $6_b$. A noter, que sur ces figures, pour des raisons de clarté, les rapports dimensionnels, notamment en ce qui concerne la largeur des isthmes, n'ont pas été respectés. Dans ces conditions les isthmes $12_a$ et $12_c$ les plus étroits ne sont généralement pas saturés en flux, même partiellement, et leur point de fonctionnement $M_{ac}$ sur la caractéristique $\mu_r$ (|H|) se situe alors sur la première portion I. Il en est de même pour les deuxième et quatrième parties de raccordement $12_b$, $12_d$. Toutefois l'abscisse du point de travail $M_{bd}$ de ces dernières sera inférieure à celle du point $M_{ac}$ étant donné qu'elles présentent une largeur supérieure à celle des premier et troisième isthmes.

Lorsqu'une impulsion motrice, par exemple positive, permettant de faire tourner le rotor dans le sens horaire D, est appliquée à la bobine 16, celle-ci engendre dans le stator 11 un flux $\Phi_B$ d'amplitude croissante qui va de la première partie massive $11_a$ à la seconde $11_b$. Une partie de ce flux reste dans le stator et passe par les parties intermédiaires $21_a$ et $21_b$ comme l'indiquent les lignes d'induction $43_a$ et $43_b$ sur la figure $6_a$, tandis que l'autre partie traverse successivement le troisième isthme, l'aimant et le premier isthme comme le montre la ligne $43_c$.

Comme le flux $\Phi_B$ de la bobine s'additionne à celui $\Phi_A$ de l'aimant au niveau des premier et troisième isthmes le point de fonctionnement $M_{ac}$ de ceux-ci se déplace sur la courbe $\mu_r$ (|H|) dans le sens des valeurs croissantes de l'amplitude du champ indiqué par la flèche F et atteint très rapidement la troisième partie III de la courbe. A noter que, du point de vue rendement du moteur, il est avantageux que cette saturation des isthmes étroits se produise le plus vite possible. Il y a donc intérêt à choisir pour ces isthmes une largeur l telle que, compte tenu de la valeur du flux de l'aimant, le point de fonctionnement $M_{ac}$ se situe, en l'absence de courant dans la bobine, le plus près possible du point de raccordement entre les première et seconde portions de courbe.

Dans les isthmes larges $12_b$ et $12_d$ le sens du flux engendré par la bobine est opposé à celui de l'aimant. Il s'ensuit que lorsque le flux $\Phi_B$ de la bobine augmente le flux total au niveau de ces parties de raccordement commence tout d'abord par décroître pour atteindre théoriquement la valeur zéro et croître ensuite. Le point de travail $M_{bd}$ se déplace donc en premier lieu dans le sens opposé à celui de la flèche F puis dans le sens indiqué par celle-ci. La position que le point $M_{bd}$ peut être amené à prendre sur la courbe avant que le rotor commence à tourner dépend de nombreux paramètres tels que la valeur du flux de l'aimant, le matériau qui compose le stator, et en particulier des largeurs des isthmes et de leur rapport. Si ce rapport l'/l est sensiblement égal à trois ou supérieur il est à peu près certain que le point de fonctionnement $M_{bd}$ ne sortira pas de la première portion de la courbe. Par contre si le rapport l'/l est plus faible, de l'ordre de deux, le point $M_{bd}$ peut parcourir une partie de la seconde portion II de la caractéristique dans le sens des valeurs croissantes du champ pour revenir ensuite en arrière, lorsque les isthmes étroits ont atteint la saturation.

Etant donné que les isthmes $12_a$, $12_c$ les plus étroits se saturent très vite, il se passe pour la bobine la même chose que dans le cas du moteur classique de la figure 1, c'est-à-dire que le courant croît très rapidement, pratiquement dès le début de l'impulsion motrice, comme le montre la courbe $I_1$ sur diagramme de la figure 7. Lorsque ce courant atteint une valeur suffisante, le rotor 18 tourne de 180° dans le sens horaire D pour venir occuper son autre position de repos dans laquelle le pôle Nord de l'aimant 19 se trouve en regard du point $S_2$ (figure 3).

Il est clair, qu'au cours de cette rotation, les points de travail $M_{ac}$ et $M_{bd}$ ne vont pas continuer à occuper les positions dans lesquelles ils se trouvaient avant que le rotor ait commencé à tourner et qu'ils vont se déplacer sur la courbe de perméabilité, étant donné que les valeurs des champs dus à l'aimant et à la bobine vont sans cesse varier aussi bien au niveau des isthmes que dans les parties massives du stator ou dans le noyau de la bobine. Cette évolution au cours de la phase dynamique de fonctionnement du moteur qui dépend de nombreux paramètres géométriques et physiques ne sera pas décrite ici du fait que, d'une part, ceci amènerait à entrer dans des considérations théoriques longues et assez approfondies et que, d'autre part, une telle description n'est pas nécessaire pour la compréhension de l'invention.

Lorsque, après l'application de l'impulsion motrice positive à la bobine, le rotor 18 se trouve dans la seconde position de repos $S_2$, le champ magnétique H créé par l'aimant au niveau de chaque isthme $12_a$-$12_b$ a la même valeur que quand le rotor occupait sa première position stable $S_1$, son sens étant inversé. De ce fait, les points de fonctionnement $M_{ac}$ et $M_{bd}$ des isthmes se retrouvent dans la position qu'ils occupaient avant cette impulsion.

Quand le moteur reçoit une impulsion négative, la bobine engendre un flux d'induction $\Phi_B$ allant de la seconde partie polaire $11_b$ à la première $11_a$, qui provoque le même déplacement des points de fonctionnement $M_{ac}$ et $M_{bd}$ que dans le cas de l'impulsion positive, donc ici encore une saturation quasi instantanée des premier et troisièmer isthmes $12_a$ et $12_c$ et une montée rapide pratiquement immédiate du courant dans la bobine. D'autre part, étant donné le sens du flux induit par cette dernière, le rotor est à nouveau amené à faire un demi-tour dans le sens horaire D et à revenir se placer dans sa position de repos initial $S_1$, c'est-à-dire celle qu'il occupait avant l'apparition de l'impulsion positive.

Si, au lieu d'envoyer ensuite au moteur une impulsion positive qui continuerait à faire tourner le rotor dans le même sens, on lui applique à nouveau une impulsion négative, le flux créé par la bobine s'additionne à celui de l'aimant dans les isthmes $12_b$, $12_d$ les plus larges, tandis que, dans les isthmes étroits, ces flux sont de sens opposés, ce que montre la figure $6_b$. C'est donc cette fois le point $M_{ac}$ qui se déplace tout d'abord dans le sens contraire à celui de la flèche F puis dans l'autre. Par contre le point $M_{bd}$ commence tout de suite à se déplacer dans le sens des valeurs croissantes de l'amplitude du champ mais, du fait de la différence de section des parties de raccordement, ce déplacement est moins rapide que celui du point $M_{ac}$. Il y a alors deux possibilités. Selon que le rapport l'/l est plus ou moins élevé soit c'est ici encore le point $M_{ac}$ qui atteint la troisième portion III de la courbe, soit c'est le point $M_{bd}$. Il n'est pas possible de préciser d'une manière générale la limite au-dessus de laquelle ce sont les isthmes étroits qui se saturent car elle dépend de nombreux paramètres et peut varier d'un moteur à l'autre du fait de dispersions de fabrication. Toutefois il est pratiquement certain que ce sera toujours le cas si le rapport l'/l est sensiblement égal à trois ou supérieur, tout au moins pour des moteurs pas à pas destinés à équiper des pièces d'horlogerie.

En ce qui concerne le point de travail des isthmes qui ne sont pas saturés, il peut selon le cas demeurer dans la première portion de la caractéristique ou être amené à parcourir une partie de la seconde portion de la courbe dans le sens de la flèche F pour revenir ensuite en arrière, et rester dans cette seconde portion ou retourner dans la première.

Que ce soit les isthmes étroits $12_a$, $12_c$ ou les isthmes larges $12_b$, $12_d$ qui se saturent, la valeur que doit atteindre le flux $\Phi_b$ pour permettre cette saturation est plus élevée que lorsque les flux de la bobine et de l'aimant s'additionnent dans les première et troisième parties de raccordement. Il s'ensuit que le temps $t_S$ pendant lequel la réluctance $R_{bb}$ du circuit magnétique vue de la bobine reste faible et, par conséquent, pendant lequel le courant i dans cette bobine croît lentement, est plus élevé, comme le montre la courbe $I_2$ de la figure 7.

Au bout de ce temps $t_S$ le courant dans la bobine croît rapidement et, lorsqu'il atteint une valeur suffisante, le rotor est entraîné en rotation mais cette fois dans le sens anti-horaire.

Si on applique ensuite au moteur une impulsion de polarité inverse à celle de la précédente, c'est-à-dire positive, tout se passe de la même façon avec des champs et flux inversés et le rotor franchit un nouveau pas dans le même sens.

Pour une raison qui apparaîtra clairement par la suite il y a intérêt à ce que la différence de montée de courant dans la bobine au début d'une impulsion motrice, selon que celle-ci amènera le rotor à tourner dans un sens ou dans l'autre, c'est-à-dire l'écart entre les courbes $I_1$ et $I_2$ (figure 7), soit suffisamment importante pour pouvoir être facilement détectée par un circuit électronique. Pour cela il faut que le rapport entre les largeurs l' et l des isthmes soit assez élevé, ce qui explique le choix d'une valeur supérieure à deux et de préférence sensiblement égale à trois pour ce rapport l'/l. Lorsque la largeur l' est environ le triple de la largeur l le temps $t_S$ que mettent les premier et troisième isthmes pour se saturer, quand le moteur fonctionne en marche arrière, est à peu près dix fois supérieur au temps qui leur est nécessaire pour atteindre la saturation dans le cas d'une rotation du rotor dans le sens horaire ce qui est très suffisant. Par ailleurs, pour que le rendement et la sécurité de fonctionnement du moteur en marche arrière ne soient pas sensiblement affectés il est préférable que le temps $t_S$ ne soit pas trop élevé. A ce propos il faut noter que le fait de s'arranger pour que le point de travail des isthmes étroits $12_a$, $12_c$ en l'absence de courant dans la bobine, soit proche du point de jonction entre les première et seconde portions de la courbe de perméabilité n'a pas seulement pour avantage de permettre d'obtenir une saturation quasi immédiate de ces isthmes lorsque le rotor tourne dans le sens horaire D mais aussi un écart important entre les temps de saturation en marche avant et en marche arrière, la différence de longueur entre les trajets que le point de fonctionnement $M_{ac}$ est amené à parcourir sur la courbe pour atteindre la troisième portion III étant d'autant plus grande que l'abscisse initiale de ce point est grande.

La figure 8 montre la forme des couples auxquels est soumis le rotor 18 lorsqu'il tourne dans le sens horaire et dans le sens inverse ; l'origine choisie pour l'angle de rotation θ correspond à la position de repos $S_1$ dans laquelle le rotor est représenté sur la figure 3. A noter que les courbes qui figurent sur ce diagramme sont des courbes expérimentales.

Si, du fait de la forme cylindrique de l'aimant 19, le couple de positionnement $C_P$ continue à présenter, comme pour le moteur classique de la figure 1, une forme sinusoïdale, il n'en est pas de même pour le couple $C_{MN}$ en marche avant, c'est-à-dire dans le sens horaire ni surtout pour le couple mutuel $C_{MI}$ en marche arrière.

Il faut remarquer que ces couples $C_{MN}$ et $C_{MI}$ ont bien les caractéristiques recherchées. Ils conservent une valeur élevée jusqu'à ce que le rotor ait tourné d'un angle nettement supérieur à une quarantaine de degrés et présente chacun un maximum après la position de repos. De ce fait, les énergies qui peuvent être communiquées au rotor en marche avant et en marche arrière et qui sont représentées par les surfaces hachurées $A_N$ et $A_I$ sont importantes.

Toutes les explications qui ont été données en ce qui concerne l'action du couple mutuel, du couple de positionnement et du couple résistant sur le rotor en fonction de la position angulaire de celui-ci et de la durée de l'impulsion motrice pour le moteur conventionnel de la figure 1, dans le cas d'une rotation dans le sens normal d, demeurent valables pour le fonctionnement en marche avant. Il suffit de remplacer les lettres minuscules utilisées pour désigner les couples et les positions angulaires caractéristiques du rotor par des lettres majuscules. La seule différence est que le couple mutuel $C_{MN}$ ne peut s'exercer ici en tant que couple moteur que sur un angle un peu supérieur à 90° au lieu de 145°. Ceci ne constitue pas véritablement un inconvénient car, là encore, il n'est souvent pas nécessaire de prolonger l'impulsion motrice jusqu'à ce que le rotor atteigne la position $E_1$ lorsqu'il part de sa position de repos $S_1$ ou le point $E_2$ s'il se trouve initialement dans son autre position de repos $S_2$, ni même les positions correspondantes $J_1$ et $J_2$ d'équilibre instable en l'absence de courant dans la bobine, pour que le rotor puisse achever son pas (voir également la fig. 3).

En ce qui concerne le fonctionnement en marche arrière, le couple mutuel $C_{MI}$ ne peut s'exercer comme couple moteur que jusqu'au point $E_2$ ou $E_1$, c'est-à-dire sur un peu moins que 90°, mais l'énergie $A_I$ acquise par le rotor lorsqu'il atteint cette position, est largement suffisante pour lui permettre de vaincre tout d'abord le couple de positionnement $C_p$ et le couple résistant et de terminer ensuite son pas sous l'action du couple $C_p$ et de l'énergie cinétique restante.

Le fait constaté expérimentalement que l'axe XX' du flux mutuel sur lequel se trouve les points $E_1$ et $E_2$ ne coïncide pas exactement avec l'axe NN' perpendiculaire à l'axe d'équilibre statique YY' peut s'expliquer par la dissymétrie due à la différence de largeur des isthmes ; les retrécissements $12_b$, $12_d$, les plus larges, demeurant plus perméables que les deux autres s'opposent moins à l'épanouissement des lignes de champ dans le stator et la direction XX' dans laquelle la concentration en flux est maximale a tendance à s'écarter de l'axe NN'. Il est possible de jouer sur les valeurs des angles α et β que font les directions VV' et WW' dans lesquelles sont situés les isthmes avec l'axe YY' ainsi que sur le rapport l'/l des largeurs de ceux-ci, pour réduire cet écart angulaire entre les axes XX' et NN' afin d'augmenter l'énergie communiquée au rotor en marche arrière aux dépens de celle en marche avant ou, au contraire, pour la réduire afin de favoriser le fonctionnement dans le sens horaire.

A noter également que cette disymétrie introduit un décalage entre les positions de repos théoriques et les positions réelles ; l'axe d'équilibre statique YY' n'est en fait pas exactement perpendiculaire aux plats $20_a$ et $20_b$.

Il ressort de ce qui précède qu'il suffit, pour changer le sens de rotation du rotor, d'appliquer à la bobine deux impulsions successives de même signe, c'est-à-dire d'inverser l'ordre de succession des polarités des impulsions motrices comme le montre la figure 9.

Ce moteur peut donc, en principe, être associé à un dispositif de commande très simple qui peut revêtir plusieurs formes de réalisation déjà connues grâce à des publications antérieures à la présente demande, en particulier par le brevet américain n° 4 066 947 déjà cité. Un tel dispositif ne sera par conséquent pas décrit ici. Toutefois il est nécessaire de préciser que, dans le cas d'une application horlogère, les impulsions motrices de 7,8 ms utilisées généralement pour commander les moteurs pas à pas classiques à un seul sens de rotation doivent être remplacées par des impulsions de durée plus courte, de l'ordre de 5 à 6 ms, étant donné que ces impulsions n'ont à entraîner le rotor que sur un angle au plus égal à environ 90° au lieu de 145°.

La simplicité des circuits de commande n'est pas le seul avantage dû au fait que le moteur peut être alimenté dans les deux sens par des impulsions simples de polarité alternée. Ceci permet également de garantir une plus large plage et une plus grande sécurité de fonctionnement que dans les systèmes faisant appel à des trains d'impulsions composites, qu'ils soient ou non à balancement, non seulement parce que le risque qu'une impulsion ne soit pas appliquée au bon moment et/ou que sa durée ne convienne pas du fait des modifications des conditions de charge et des dispersions inhérentes à la fabrication est éliminé, mais également pour la raison suivante : si une impulsion motrice se prolonge après que le rotor ait atteint la position $E_1$ ou $E_2$, que se soit en marche arrière ou en marche avant, ce qui peut arriver fréquemment lorsque le moteur est alimenté par des impulsions de durée fixe prévues pour assurer un fonctionnement correct du moteur dans les plus mauvaises conditions de charge, le couple mutuel agit comme un couple de freinage qui peut s'exercer sur un angle encore plus important que dans le cas d'un moteur classique, d'où une certaine auto-régulation et un meilleur contrôle du moteur à fréquence élevée.

Ce moteur continue toutefois à présenter l'un des inconvénients cités à propos des moteurs réversibles connus : la possibilité d'une inversion involontaire du sens de rotation. Ce défaut est particulièrement gênant dans le cas où le moteur est destiné à équiper une montre-bracelet. Le ratage d'un pas, suite par exemple à un excès de charge, ou un déplacement accidentel dû à un choc ou à un champ magnétique extérieur sont alors très probables.

L'invention permet également de résoudre ce problème en associant au moteur un dispositif de commande capable de prévoir, au début de l'application de chaque impulsion motrice à la bobine, le sens dans lequel le rotor s'apprête à tourner, d'interrompre cette impulsion si le sens est incorrect et d'envoyer une nouvelle impulsion de polarité opposée afin que le rotor tourne dans le bon sens.

Le principe de détermination du sens de rotation du rotor est le suivant : en se reportant à nouveau à la figure $6_a$, on voit que, si le flux créé par la bobine, figuré par les lignes d'induction $43_a$, $43_b$ et $43_c$, conserve le même sens qui correspond à une impulsion positive destinée à faire tourner le rotor dans le sens horaire D et si, par contre, le sens du flux de l'aimant est inversé du fait que le rotor n'occupe plus la position dans laquelle il est représenté mais celle dans laquelle le pôle Nord de l'aimant se trouve en regard du point $S_2$, le rotor sera entraîné dans le sens antihoraire, c'est-à-dire contraire à celui dans lequel il devrait effectivement tourner. Par ailleurs, les flux de l'aimant et de la bobine s'additionnant dans les isthmes les plus larges, le courant dans la bobine aura la forme de courbe $l_2$ (voir fig. 7). D'une manière générale, si le moteur doit fonctionner en marche avant, le rotor tournera dans le sens désiré si les premier et troisième isthme $12_a$, $12_c$ se saturent pratiquement immédiatement (courbe $I_1$). Au contraire pour la marche arrière, le moteur fonctionnera correctement si ces mêmes isthmes ou les deux autres $12_b$, $12_d$ selon la valeur du rapport l'/l, ne se saturent qu'au bout d'un temps $t_s$ non négligeable (courbe $l_2$).

Il est donc possible, en mesurant, au bout d'un temps $t_0$ prédéterminé après le début de chaque impulsion motrice, la valeur du courant i dans la bobine et en le comparant à une valeur de seuil $i_0$ comprise entre les valeurs $i_1$ et $i_2$ au même instant des courants dans le cas d'une saturation quasi instantanée et d'une saturation retardée des isthmes, de déterminer, alors que le rotor est encore immobile, si le sens dans lequel il s'apprête à tourner est correct. La valeur de seuil $i_0$ est de préférence la valeur moyenne de $i_1$ et $i_2$. Toute inversion accidentelle du sens de rotation du rotor peut ainsi être évitée.

La figure 10 représente, dans le cas de l'application à une montre électronique, une forme possible de réalisation du dispositif de commande destiné à être associé au moteur et capable de fournir à ce dernier des impulsions motrices de polarité correspondant à la position initiale du rotor et au sens de rotation choisi.

Ce dispositif comporte un oscillateur à quartz 110 qui délivre un signal de fréquence standard, un diviseur de fréquence 111 qui fournit, en réponse au signal de l'oscillateur, un signal de base de temps de fréquence précise, par exemple de 1 Hz, et un circuit formateur d'impulsions 112 qui produit à partir du signal de base de temps et de divers autres signaux prélevés aux sorties d'étages intermédiaires du diviseur de fréquence, d'une part, des impulsions de commande normales P de durée déterminée, de préférence de 5 à 6 millisecondes et des impulsions de commande de correction PC de même durée que les impulsions de commande normales, mais retardées par rapport à celles-ci d'un temps déterminé, par exemple de 62 millisecondes. Des impulsions de commande normales P sont appliquées à l'une des deux entrées d'une porte ET 114, tandis qu'une des deux entrées d'une autre porte ET 115 reçoit les impulsions de correction PC. Les sorties des portes ET 114 et 115 sont reliées aux deux entrées d'une porte OU 116 dont la sortie est connectée, d'une part, à l'entrée d'une bascule de type T 117 qui change d'état chaque fois que son entrée passe de l'état logique « 0 » à l'état « 1 » et, d'autre part, aux entrées de deux portes ET 118 et 119, les autres entrées de ces portes ET 118 et 119 étant reliées respectivement aux sorties Q et Q̄ de la bascule T 117. La bobine 16 du moteur est branchée de manière classique dans un pont de quatre transistors MOS 120 à 123. Les transistors 120 et 121, respectivement de type p et n, ont leurs électrodes de commande reliées à la sortie de la porte ET 118, tandis que celles du transistor 122 de type p et du transistor 123, de type n, sont connectées à la sortie de la porte 119. Par ailleurs, les transistors 120 et 122 ont leurs sources reliées au pôle positif + U d'une source de tension d'alimentation non représentée, tandis que les sources des transistors 121 et 123, connectées ensemble, sont reliées indirectement à la masse.

A noter que le circuit de commande du moteur formé par les éléments 117 à 123 se retrouve très souvent dans le cas des moteurs monophasés unidirectionnels classiques.

Entre les sources des transistors 121 et 123 et la masse se trouve une résistance de mesure 124 de forte valeur, aux bornes de laquelle est branchée une porte de transmission 125, constituée par un transistor MOS de type p qui permet de court-circuiter la résistance 124, sauf pendant un court instant, au moment $t_0$ où une mesure du courant dans la bobine 16 doit être effectuée. Pour cela le transistor 125 reçoit sur sa grille de commande, par l'intermédiaire d'un inverseur 126, des impulsions de test T très courtes, dont la durée peut aller de 15 à 60 microsecondes et qui sont produites par le circuit formateur d'impulsions 112.

La borne de la résistance 124 connectée aux sources des transistors 121 et 123 est reliée à l'entrée non inverseuse d'un comparateur 127 dont l'autre entrée reçoit une tension de référence $V_R$ proportionnelle à la valeur de seuil $i_0$ (figure 7). La sortie du comparateur 127 est reliée à une entrée d'une porte OU EXCLUSIF 128 dont l'autre entrée reçoit un signal R de commande de sens de rotation du moteur qui peut être engendré par exemple par un commutateur à commande manuelle (non représenté) que comporte la montre. La sortie de la porte OU EXCLUSIF 128 est connectée à l'une des deux entrées d'une porte ET 131 dont la sortie est reliée à l'entrée de positionnement S d'une bascule de type D 132.

La porte ET 131 reçoit sur son autre entrée le signal de test T retardé par deux inverseurs 129, 130. Ce retard permet d'éviter que les états transitoires rapides de la porte OU EXCLUSIF, par exemple le passage de l'une de ses entrées de l'état « 0 » à l'état « 1 » lors du test sur le courant, agissent sur la bascule 132. Par ailleurs, la bascule D 132 reçoit sur son entrée d'horloge CL les impulsions de commande normales P, tandis que son entrée D est maintenue en permanence au niveau logique « 0 ». Enfin les sorties Q et Q̄ de cette bascule D 132 sont reliées respectivement aux deux autres entrées des portes ET 115 et 114.

Le fonctionnement du circuit qui vient d'être décrit va maintenant être expliqué en rapport avec les diagrammes des figures $11_a$ et $11_b$ montrant la forme des signaux en différents points du circuit, respectivement dans le cas où la polarité de l'impulsion motrice appliquée à la bobine correspond au sens de rotation correct et dans le cas contraire. Sur ces diagrammes figurent les impulsions de commande normales P et de correction PC, les signaux R et T ainsi que les signaux SC à la sortie du comparateur 127, QD à la sortie Q de la bascule D et QT à la sortie Q de la bascule T.

On admettra qu'à l'instant initial choisi pour cette explication qui se situe avant l'apparition d'une impulsion de commande normale P à la sortie du circuit formateur d'impulsions 112, les sorties Q de la bascule T 117 et de la bascule D 132 sont à l'état « 0 » et, par ailleurs, que le signal R de commande du sens de rotation est à l'état « 1 » qui correspond à une commande en marche-avant. Toutes les sorties des portes ET du circuit sont à l'état « 0 » et les transistors 120 et 122 sont bloqués. Par contre, les transistors 121 et 123 sont conducteurs et la bobine 16 est court-circuitée. La porte de transmission 125 est également passante et la sortie du comparateur 127 est au niveau logique « 0 ». Lorsqu'une impulsion de commande normale P est produite par le circuit formateur 112, la porte ET 114, dont l'entrée est reliée à la sortie Q̄ de la bascule D 132 est déjà à « 1 », devient passante, ce qui, par l'intermédiaire de la porte OU 116 fait passer l'entrée T de la bascule 117 et par conséquent sa sortie Q de « 0 » à « 1 ». La porte ET 118 devient alors passante tandis que la porte ET 119 reste bloquée du fait que l'état de ses entrées a seulement été inversé. Le transistor 120 devient alors conducteur alors que le transistor 121 se bloque et un courant commence à circuler dans la bobine en suivant le trajet indiqué par la ligne $l_1$, la résistance de mesure 124 étant toujours court-circuitée par le transistor 125. L'état des sorties des autres éléments du circuit y compris de la bascule D 132 demeure inchangé.

Au bout d'un temps $t_0$, après l'apparition de l'impulsion de commande normale, qui peut être choisi entre 0,5 et 1 milliseconde suivant les caractéristiques du moteur, le circuit formateur 112 délivre une impulsion de test qui bloque pendant un bref instant la porte de transmission 125. Le courant est alors contraint de passer momentanément dans la résistance de mesure 124. Deux cas peuvent alors se présenter. Si la tension aux bornes de la résistance 124, proportionnelle au courant dans la bobine, est supérieure à la tension de référence $V_R$, ce qui signifie que le rotor s'apprête à tourner effectivement dans le sens horaire, la sortie du comparateur 127 passe à l'état « 1 ». Ce signal a pour effet de faire passer la sortie de la porte OU EXCLUSIF qui se trouvait à l'état « 1 » à l'état « 0 » et de bloquer la porte ET 131 qui ne transmet pas l'impulsion de test T retardée. Aucun signal n'apparaissant à l'entrée de positionnement de la bascule D 132, l'état de celle-ci reste inchangé et l'impulsion de commande normale est transmise intégralement au circuit de commande, le moteur effectuant alors son pas grâce à l'application à la bobine 16 d'une impulsion motrice normale. L'impulsion de commande de correction qui apparaît par la suite est bloquée par la porte ET 115. Par ailleurs, après l'application de l'impulsion motrice, tous les éléments qui ne l'avaient pas conservé ont retrouvé leur état initial sauf la bascule T qui reste dans son état de travail jusqu'à l'apparition d'une nouvelle impulsion à son entrée.

Si, au contraire, lors de la mesure, la tension aux bornes de la résistance 124 est inférieure à la tension de référence, la sortie du comparateur 127 reste à « 0 » et celle de la porte OU EXCLUSIF 128 demeure à « 1 ». La porte ET 131 transmet alors l'impulsion de test T à l'entrée de positionnement S de la bascule D. Lorsque l'entrée S momentanément amenée à l'état « 1 » revient à « 0 » la sortie Q de la bascule passe à « 1 » et la sortie Q̄ à « 0 », ce qui a pour effet de bloquer la porte ET 114 qui cesse de transmettre l'impulsion de commande normale et de rendre passante la porte ET 115 qui laisse ensuite passer l'impulsion de commande de correction lorsqu'elle est produite. Le flanc montant de cette impulsion fait basculer la bascule T, ce qui a pour conséquence de rendre passante la porte ET 119, la porte ET 118 étant bloquée. Les transistors 121 et 122 étant alors conducteurs et les transistors 120 et 123 bloqués, la bobine 16 reçoit une impulsion motrice de correction de polarité opposée à celle qui avait commencé à lui être appliquée sous l'effet de l'impulsion de commande normale. L'arrivée de l'impulsion de commande normale suivante ramène la bascule D 132 à son état de repos et fait repasser les sorties Q et Q̄ de la bascule T 117, respectivement à « 1 » et « 0 », le moteur recevant alors une impulsion motrice normale de polarité inverse à celle de l'impulsion motrice de correction qui la précède.

Le même processus se reproduit pour chaque impulsion de commande. Chaque fois que le rotor ne se trouvera pas dans la position de repos correcte pour tourner dans le bon sens, le moteur sera entraîné par une impulsion motrice de correction, de même signe que l'impulsion motrice qui l'aura effectivement fait tourner une seconde avant et l'ordre de succession des polarités des impulsions motrices normales qu'il recevra par la suite sera l'inverse de celui des impulsions qu'il recevait avant, en supposant naturellement que le signal de commande de sens de rotation demeure à « 1 ».

Le fonctionnement du dispositif est tout à fait analogue lorsque le moteur doit tourner dans le sens anti-horaire. Le signal R étant alors à « 0 », la sortie de la porte OU EXCLUSIF 128 est normalement à « 0 » ; elle le restera et par conséquent aucun signal de commande de correction ne sera appliqué à l'entrée S de la bascule D 132 tant que le courant dans la bobine au moment de la mesure restera inférieur à la valeur de seuil $i_0$, c'est-à-dire tant que le moteur s'apprêtera à tourner dans le bon sens. Au contraire, dans le cas où ce courant sera supérieur à $i_0$, la sortie du comparateur 127 passant de « 0 » à « 1 », celle de la porte 128 passera également à « 1 » et la porte 131 transmettra l'impulsion de test T retardée. L'apparition de ce signal de commande de correction à l'entrée S de la bascule D provoquera le blocage de l'impulsion de commande normale, la transmission de l'impulsion de commande de correction au circuit de commande et, par conséquent, l'application au moteur d'une impulsion motrice de correction et une inversion de l'ordre de succession des polarités pour les impulsions motrices normales suivantes.

A noter que la fréquence de 1 Hz envisagée dans les explications qui précèdent est celle qui correspond au régime de fonctionnement normal de la montre. En fait, comme cela a déjà été indiqué, l'utilisation d'un moteur reversible est essentiellement destinée à permettre une correction ou une modification des informations horaires dans les deux sens qui doivent se faire généralement avec des impulsions de fréquence nettement plus élevée, mais ceci ne change rien au fonctionnement du circuit sinon que dans ce cas le retard des impulsions PC par rapport aux Impulsions P devra être nettement inférieur à 62 millisecondes et dépendra naturellement de la fréquence du signal de correction.

Il faut également remarquer que, comme le moteur auquel il est associé, le dispositif de commande demeure très simple. L'invention permet donc de fournir un ensemble moteur, moteur pas à pas plus dispositif de commande, très économique et parfaitement fiable.

Par ailleurs, il est clair que l'on pourrait réaliser un moteur reversible parfaitement symétrique en prévoyant quatre isthmes de même largeur l. Ceci permettrait d'obtenir des performances identiques dans les deux sens. Par contre le phénomène de saturation différentielle des parties de raccordement n'existerait plus et cela priverait du moyen simple qui vient d'être décrit pour éviter toute inversion involontaire du sens de rotation du rotor. En effet on aurait alors une saturation quasi instantanée des premier et troisième isthmes 12a, 12c dans le cas de la marche avant et des second et quatrième isthmes $12_b$, $12_d$ pour la marche arrière. De ce fait le courant dans la bobine aurait toujours la forme de la courbe $I_1$.

En fait, comme dans une pièce d'horlogerie le moteur n'est amené à fonctionner en marche arrière que très rarement, il n'y a pas de véritable inconvénient à ce que le rendement du moteur soit un peu plus faible dans ce sens qu'en marche avant. Au contraire, il vaut mieux favoriser le fonctionnement dans le sens horaire. C'est la raison pour laquelle les isthmes sont disposés de façon que les plus étroits se saturent immédiatement en marche avant. En effet, une croissance rapide du courant, pratiquement dès le début d'une impulsion motrice, permet d'obtenir très rapidement un couple mutuel suffisant pour faire tourner le rotor et, par conséquent, un meilleur rendement que lorsque le courant croît lentement pendant un $t_s$ non négligeable.

Toutefois, la solution du moteur symétrique peut convenir pour d'autres applications.

Les figures 12 à 15 montrent quatre autres modes de réalisation possibles du moteur selon l'invention. Sur ces figures les éléments identiques ou correspondant à ceux de la figure 3 sont désignés par les mêmes numéros ou lettres.

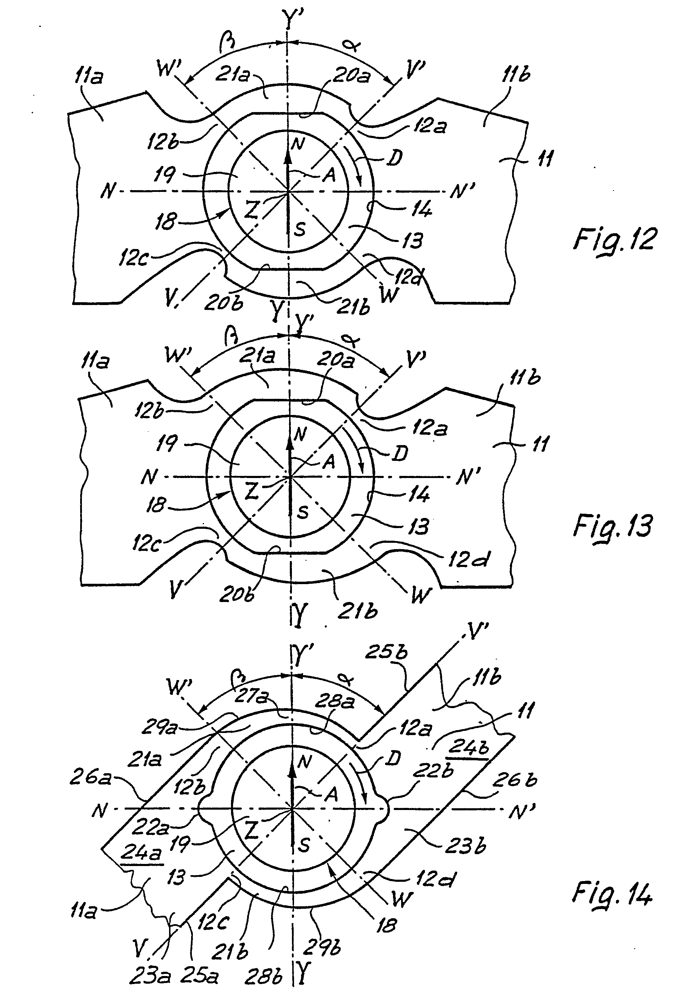

Le moteur de la figure 12 se distingue du moteur de la figure 3 par le fait qu'il n'existe plus d'isthme entre les première partie intermédiaire $21_a$ et partie massive $11_a$ ni entre les secondes partie intermédiaire $21_b$ et partie polaire $11_b$. Par ailleurs, si l'on fait abstraction des plats $20_a$ et $20_b$, les deux parties intermédiaires $21_a$, $21_b$ ont une largeur sensiblement constante, comprise entre deux et quatre fois celle des première et troisième parties de raccordement 12a, 12c qui sont toujours constituées par des isthmes. Ceci équivaut à dire que les parties intermédiaires ont ici la même section que les seconde et quatrième parties de raccordement. Ce mode de réalisation est moins avantageux que celui de la figure 3. En effet le moteur peut être mécaniquement plus fragile étant donné que la section des parties intermédiaires doit être relativement faible, alors que dans le mode de réalisation précédemment décrit, cette section nécessairement plus élevée, de même d'ailleurs que la forme des parties intermédiaires est pratiquement sans importance car le flux dans ces zones est conditionné par celui qui existe au niveau des isthmes. A noter, que les modes de réalisation des figures 13 à 15 présentent plus ou moins ce même désavantage.

La différence entre le moteur de la figure 13 et celui de la figure 12 tient au fait que les parties intermédiaires $21_a$ et $21_b$ présentent une largeur non plus sensiblement constante, mais décroissante en allant des deuxième et quatrième parties de raccordement $12_b$, $12_d$ vers les isthmes $12_a$, $12_c$, le rapport entre cette largeur et celle des isthmes étant toujours compris entre deux et quatre.

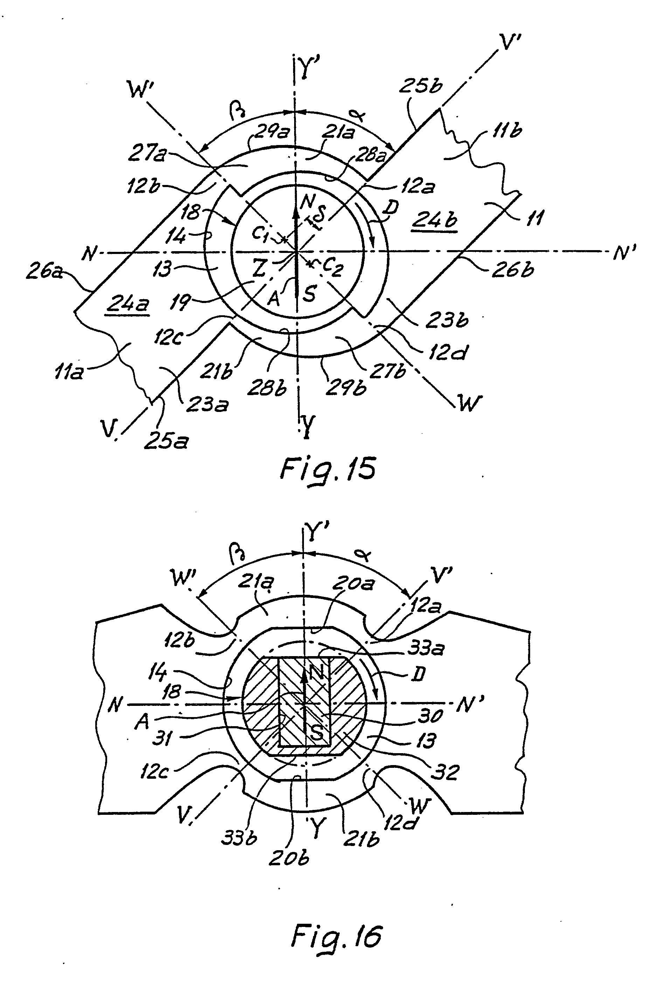

La figure 14 montre une forme particulière de stator 11 permettant de réaliser un moteur à deux isthmes et à parties intermédiaires de largeur décroissante comme dans le cas de la figure 13.

Dans ce mode de réalisation, l'évidement central conserve la forme d'un cylindre de révolution centré sur l'axe Z de rotation du rotor 18. Par contre, les moyens de positionnement qui déterminent les positions de repos du rotor sont constitués par des encoches $22_a$, $22_b$ pratiquées dans la paroi interne 14 et situées sur un diamètre NN' sensiblement perpendiculaire à l'axe d'équilibre statique YY'. A noter, que le remplacement des plats $20_a$, $20_b$ (figures 3, 12, 13) par des encoches ne répond en fait à aucune nécessité et que cette substitution pourrait également avoir lieu pour les formes de réalisation précédemment décrites.

Bien que concrètement le stator 11 soit ici encore réalisé en une seule pièce, ce stator peut être considéré comme constitué par deux portions 23a et 23b. Les deux portions 23a, 23b sont symétriques par rapport à l'axe de rotation Z du rotor et sont disposées de part et d'autre d'une droite angulairement inclinée par rapport à l'axe d'équilibre statique YY' dans le sens horaire D.

Pour des raisons qui apparaîtront clairement par la suite cette droite et l'angle d'inclinaison seront respectivement désignés par VV' et $\alpha$.

La première portion 23a peut être décomposée en deux surfaces. La première, 24a, de ces surfaces a la forme d'un rectangle dont un sommet est situé sur l'axe Z de pivotement du rotor et dont un bord 25a est confondu avec la droite VV' et qui est amputé d'un secteur circulaire de 90° également centré sur l'axe Z de façon à former un premier quart de l'évidement central 13.

Le bord 26a du rectangle, parallèle au côté $25_a$, est naturellement séparé de ce dernier par une distance supérieure au rayon de l'évidement central.

La deuxième surface 27a, en forme de corne, est limitée par un bord intérieur 28a circulaire qui constitue une partie de la paroi interne et délimite un deuxième quart de l'évidement central 13 et par un bord extérieur $29_a$ qui, en partant de la droite VV', s'écarte progressivement du bord intérieur $28_a$ pour rejoindre le bord 26a de la première surface. Ce bord extérieur $29_a$ peut être circulaire mais cela n'est pas nécessaire.

Du fait de la symétrie par rapport à l'axe Z, tout ce qui vient d'être dit pour la portion $24_a$ est également vrai pour la portion $24_b$, à condition de remplacer l'indice a par b.

La largeur des secondes surfaces $27_a$ et $27_b$ aux endroits des raccordements entre les deux portions $23_a$, $23_b$ qui se font naturellement au niveau de la droite VV' est choisie suffisamment faible pour que ces zones de jonction 12a, 12b puissent être très rapidement saturées en flux et constituer par conséquent les première et troisième parties de raccordement. Par ailleurs, bien que l'on passe moins brusquement d'une partie étroite à une partie massive que dans le cas des modes de réalisation décrits précédemment lorsque l'on franchit les limites entre les première et seconde surfaces des portions du stator, on peut considérer que les premières surfaces $24_a$, $24_b$ constituent les parties polaires $11_a$ et $11_b$ et que les seconde et quatrième parties de raccordement $12_b$, $12_d$ se situent aux jonctions entre les premières surfaces et les secondes $27_a$, $27_b$ qui constituent les parties intermédiaires. La somme des angles α et β est alors égale à 90°.

Une forme modifiée du moteur de la figure 14 est représentée à la figure 15 sur laquelle les éléments correspondants sont désignés par les mêmes numéros de référence. Le secteur circulaire dont est amputé la surface rectangulaire $24_a$ n'a plus ici pour centre le sommet du rectangle situé sur l'axe Z de rotation du rotor 18, mais un point $C_1$ situé du côté de la droite VV' où se trouve la première portion 23a et décalé d'une distance δ par rapport à l'axe Z dans la direction WW' perpendiculaire à la droite VV'. De même le secteur circulaire découpé dans la surface rectangulaire $24_b$ de la seconde section $23_b$ a pour centre un point $C_2$ symétrique du point $C_1$ par rapport à l'axe Z. En outre, les rebords internes $28_a$ et $28_b$ des deuxièmes surfaces $27_a$ et $27_b$ sont toujours circulaires mais ont pour centres respectifs les points $C_2$ et $C_1$. L'évidement central 13 est ainsi formé par deux demi-cylindres de même rayon et décalés l'un par rapport à l'autre d'une distance 2δ dans la direction WW'. Comme dans les moteurs classiques à stator en deux pièces, le décalage permet d'assurer le positionnement au repos du rotor 18 dans la direction YY' de réluctance minimale sans qu'il soit nécessaire de prévoir d'autres moyens tels que des encoches ou des plats. Enfin, la largeur des jonctions entre les premières et les secondes surfaces qui sont situées sur la droite WW' et qui constituent les seconde et quatrième parties de raccordement $12_b$, $12_d$ est choisie ici encore de façon que le rapport entre cette largeur et celle des deux autres raccords $12_a$, $12_c$ soit compris entre deux et quatre, de préférence voisin de trois. Ce mode de réalisation peut être considéré comme une forme particulière d'un moteur à quatre isthmes.

Dans le cas du moteur représenté à la figure 16, le stator 11 est identique à celui du mode de réalisation de la figure 3. Par contre, le rotor 18 ne comporte plus un aimant cylindrique à aimantation diamétrale mais un aimant en forme de barreau 30 qui peut être par exemple parallélépipédique ou cylindrique et qui est aimanté suivant son axe longitudinal. Cet aimant 30 est logé dans une cavité 31 de l'arbre 32 du rotor. Cet arbre 32 est réalisé en matière plastique et présente deux faces planes ou deux plats parallèles $33_a$, $33_b$ destinés à faciliter la fabrication du rotor.

Un tel rotor est décrit en détail et ses divers avantages indiqués dans la demande de brevet britannique déposée le 4 février 1981 au nom de la demanderesse et publiée sous le numéro 2 071 429 dans le cadre d'un moteur unidirectionnel. Il suffit donc de dire ici, qu'un rotor ainsi réalisé permet d'obtenir, comme le montre la figure 17, un couple de positionnement $C_p$ dont la forme n'est plus sinusoïdale mais dont la pente au voisinage des positions de repos est plus élevée que dans le cas d'un rotor cylindrique. Les positions de repos $S_1$ et $S_2$ du rotor sont ainsi mieux définies. Par ailleurs, le décalage qui existe lorsque le rotor est soumis à un couple résistant est réduit et le domaine de fonctionnement du moteur est élargi.

La figure 17 montre également pour les deux sens de rotation la forme des couples mutuels $C_{MN}$ et $C_{MI}$ qui ont été obtenus avec le moteur de la figure 16.

Il est clair que la substitution du rotor à aimant en barreau à celui à aimant cylindrique n'est pas réservée au mode de réalisation de la figure 3 et qu'elle est possible dans tous les cas, en particulier pour les moteurs décrits en référence aux figures 12 à 15.

Dans tous les modes de réalisation qui ont été décrits, le phénomène de saturation différentielle des parties de raccordement utilisé pour déterminer le sens de rotation du rotor au début d'une impulsion motrice est obtenu grâce à la forme géométrique du stator, car c'est en fait le moyen le plus simple pour atteindre le but recherché. Il existe toutefois d'autres possibilités, par exemple percer des trous radiaux de sections différentes dans les directions VV' et WW', utiliser des matériaux ferromagnétiques différents pour réaliser, d'une part, les parties polaires et intermédiaires et, d'autre part, les parties de raccordement, etc. ou combiner certains de ces moyens. D'une manière générale, il suffit que les parties de raccordement aient un comportement magnétique semblable par exemple à celui des isthmes du moteur de la figure 3 en ce qui concerne leur perméance ou leur perméabilité relative.

Autre remarque importante, il n'est pas indispensable pour que le moteur fonctionne que les parties de raccordement atteignent en marche avant et/ou en marche arrière la saturation telle qu'elle a été définie ci-dessus. Il suffit que ces zones présentent une baisse de perméabilité importante lors de l'apparition d'une impulsion motrice pour que la partie du flux engendré par la bobine qui passe par les parties intermédiaires $21_a$, $21_b$, et qui est en fait perdue, reste assez faible pour que la partie utile de ce flux, qui traverse l'aimant, puisse atteindre une valeur suffisante pour provoquer la rotation du rotor. Toutefois il est clair, que ceci ne va pas dans le sens d'une amélioration des performances du moteur.

L'invention n'est naturellement pas limitée aux modes de réalisation qui ont été décrits ou envisagés. En particulier, il est possible de donner à l'évidement central du stator d'autres formes, par exemple une forme légèrement elliptique, le petit axe de l'ellipse étant orienté dans la direction YY' ; des moyens de positionnement supplémentaires tels que plats, encoches ou combinaisons de ceux-ci ne sont alors plus indispensables.

De même, le stator peut ne pas être monobloc mais formé, par exemple, de plaques empilées ou de plusieurs éléments réunis les uns aux autres, notamment pour des applications non horlogères.

Par ailleurs, le dispositif de commande du moteur peut revêtir d'autres formes que celle décrite. Il peut être prévu pour fournir des impulsions motrices hachées, c'est-à-dire constituées chacune par une suite d'impulsions élémentaires, entrecoupées de périodes de court-circuit de la bobine.

Il est également possible de modifier le dispositif de commande de manière à la rendre capable d'assurer un asservissement de l'énergie des impulsions motrices à la charge du moteur et plus particulièrement un asservissement qualifié d'indirect faisant appel à la détection de la rotation ou de la non-rotation du rotor puisque le circuit prévu pour déterminer, au début d'une impulsion, le sens de rotation du rotor permet de savoir si ce dernier a ou non franchi son pas en réponse à l'impulsion précédente, à condition naturellement, de prévoir un système permettant de faire la différence entre un déplacement accidentel et une absence de rotation due à une impulsion motrice d'énergie insuffisante, compte tenu de la charge du moteur.

**Revendications**

1. Moteur pas à pas à deux sens de rotation comprenant un stator (11) dans lequel est ménagé un évidement central (13) délimité par une paroi interne (14), une bobine couplée magnétiquement au stator pour créer dans celui-ci un champ magnétique en réponse à une impulsion motrice, un rotor (18) monté à rotation autour d'un axe (7) dans ledit évidemment central et comportant un aimant permanent (19) ayant au moins une paire de pôles magnétiques opposés qui définissent un axe d'aimantation (A), et des moyens de positionnement pour assurer au rotor deux positions de repos dans lesquelles ledit axe d'aimantation est dirigé suivant un axe d'équilibre statique (YY'), le stator (11) comprenant une première et une seconde parties polaires (11$_a$, 11$_b$) opposées qui entourent partiellement le rotor (18) caractérisé par le fait que ces parties polaires (11$_a$, 11$_b$) sont reliées entre elles de part et d'autre dudit rotor grâce à une première partie intermédiaire (21$_a$) et une première et une seconde parties de raccordement (12$_a$, 12$_b$) entre ladite première partie intermédiaire et respectivement la seconde et la première partie polaire et à une seconde partie intermédiaire (21$_b$) et une troisième et une quatrième parties de raccordement (12$_c$, 12$_d$) entre ladite seconde partie intermédiaire et respectivement ladite première et ladite seconde partie polaire ; que lesdits moyens de positionnement (20$_a$, 20$_b$; 22$_a$, 22$_b$) sont prévus pour que ledit axe d'équilibre statique (YY') coupe lesdites parties intermédiaires ; et que lesdites parties de raccordement sont conçues pour que deux au moins d'entre elles qui joignent la première et la seconde parties intermédiaires respectivement à l'une et à l'autre desdites parties polaires aient leur perméabilité qui chute entre l'instant où une impulsion motrice est appliquée à la bobine (16) et celui où le rotor commence à tourner.

2. Moteur pas à pas selon la revendication 1 caractérisé par le fait que lesdites première et troisième parties de raccordement (12$_a$, 12$_c$), respectivement lesdites seconde et quatrième parties de raccordement (12$_b$, 12$_d$) sont situées sensiblement symétriquement par rapport à l'axe de rotation (Z) du rotor (18) dans une direction (VV', respectivement WW') inclinée par rapport audit axe d'équilibre statique d'un angle ($\alpha$, respectivement $\beta$) compris entre 30° et 60°, dans un sens correspondant à un premier, respectivement un second sens de rotation du rotor.

3. Moteur pas à pas selon la revendication 2 caractérisé par le fait que les directions (VV', WW') dans lesquelles sont situées lesdites parties de raccordement (12$_a$-12$_d$) forment chacune, avec ledit axe d'équilibre statique, un angle sensiblement égal à 40°.

4. Moteur pas à pas selon la revendication 2 ou 3 caractérisé par le fait que lesdites parties de raccordement (12$_a$-12$_d$) sont conçues pour que la première (12$_a$) et la troisième (12$_c$) d'entre elles soient saturées en flux magnétique et que leur perméabilité atteigne ainsi pratiquement celle du vide, lorsque la bobine (16) engendre dans le stator (11), en réponse à une impulsion motrice, un champ magnétique permettant de faire tourner le rotor (18) dans ledit premier sens de rotation (D).

5. Moteur pas à pas selon la revendication 4 caractérisé par le fait que lesdites parties de raccordement (12$_a$-12$_d$) sont prévues pour que la seconde (12$_b$) et la quatrième (12$_d$) d'entre elles soient saturées en flux magnétique lorsque la bobine (16) engendre dans le stator (11) un champ magnétique permettant de faire tourner le rotor (18) dans ledit second sens de rotation.

6. Moteur pas à pas selon la revendication 5 caractérisé par le fait que lesdites parties de raccordement (12$_a$-12$_d$) sont telles que la saturation de la première (12$_a$) et de la troisième (12$_c$) dans le cas d'une rotation du rotor (18) dans le premier sens (D) soit plus rapide que celle de la seconde (12$_b$) et de la quatrième (12$_d$) lorsque le rotor est amené à tourner dans le second sens de rotation.

7. Moteur pas à pas selon la revendication 4 caractérisé par le fait que lesdites parties de raccordement (12$_a$-12$_d$) sont prévues pour que la première (12$_a$) et la troisième (12$_c$) soient également saturées en flux magnétique lorsque le champ magnétique créé par la bobine (16) permet de faire tourner le rotor (18) dans ledit second sens de rotation.

8. Moteur pas à pas selon la revendication 4 caractérisé par le fait que le stator (11) est réalisé en une seule pièce d'épaisseur à peu près constante, en un matériau de haute perméabilité magnétique, et que lesdites première et troisième parties de raccordement (12$_a$, 12$_c$) sont constituées par les isthmes sensiblement de même largeur (1).

9. Moteur pas à pas selon la revendication 8 caractérisé par le fait que lesdites seconde et quatrième parties de raccordement ($12_b$, $12_d$) sont également constituées par des isthmes.

10. Moteur pas à pas selon la revendication 9 caractérisé par le fait que les isthmes qui forment lesdites seconde et quatrième parties de raccordement ($12_b$, $12_d$) ont une largeur (l') sensiblement égale à celle des isthmes qui forment les première et troisième parties de raccordement ($12_a$, $12_c$).

11. Moteur pas à pas selon la revendication 9 caractérisé par le fait que les isthmes qui forment lesdites seconde et quatrième parties de raccordement ($12_b$, $12_d$) ont une largeur (l') comprise entre deux et quatre fois celle (l) des isthmes qui forment lesdites première et troisième parties de raccordement ($12_a$, $12_c$).

12. Moteur pas à pas selon la revendication 11 caractérisé par le fait que la largeur (l') des isthmes qui forment les seconde et quatrième parties de raccordement ($12_b$, $12_d$) est sensiblement égale à trois fois celle (l) des isthmes qui constituent les première et troisième parties de raccordement ($12_a$, $12_c$).

13. Moteur pas à pas selon la revendication 8 caractérisé par le fait que, d'une part, la première partie intermédiaire ($21_a$) et la seconde partie de raccordement ($12_b$) et, d'autre part, la seconde partie intermédiaire ($21_b$) et la quatrième partie de raccordement ($12_d$) sont réalisées de manière à former deux portions de stator ayant une largeur à peu près constante, comprise entre deux et quatre fois celle des isthmes qui constituent les première et troisième parties de raccordement ($12_a$, $12_c$).

14. Moteur pas à pas selon la revendication 8 caractérisé par le fait que, d'une part, la première partie intermédiaire ($21_a$) et la seconde partie de raccordement ($12_b$) et, d'autre part, la seconde partie intermédiaire ($21_b$) et la quatrième partie de raccordement ($12_d$) sont réalisées de manière à former deux portions de stator présentant une largeur qui croît à peu près uniformément à partir des isthmes qui constituent les première et troisième parties de raccordement ($12_a$, $12_c$) et qui reste comprise entre deux et quatre fois celle desdits isthmes.

15. Moteur pas à pas selon l'une des revendications précédentes caractérisé par le fait que ledit évidement central (13) a essentiellement la forme d'un cylindre de révolution d'axe confondu avec l'axe (Z) de rotation du rotor.

16. Moteur pas à pas selon la revendication 15 caractérisé par le fait que lesdits moyens de positionnement comportent deux plats ($20_a$, $20_b$) diamètralement opposés et sensiblement parallèles que présente ladite paroi interne (14) du stator (11), l'axe d'équilibre statique (YY') étant à peu près perpendiculaire à ces plats.

17. Moteur pas à pas selon la revendication 15 caractérisé par le fait que lesdits moyens de positionnement comportent deux encoches ($22_a$, $22_b$) diamètralement opposées, pratiquées dans ladite paroi interne (14) du stator (11), l'axe d'équilibre statique (YY') étant à peu près perpendiculaire à la droite joignant ces encoches.

18. Moteur pas à pas selon l'une des revendications précédentes caractérisé par le fait que ledit aimant permanent (19) est réalisé sous forme d'un cylindre de révolution aimanté diamétralement.

19. Moteur pas à pas selon l'une des revendications 1 à 17 caractérisé par le fait que ledit aimant permanent (30) est réalisé sous forme d'un barreau aimanté suivant son axe longitudinal.

20. Ensemble moteur comprenant un moteur pas à pas selon la revendication 6, 7, 11, 13 ou 14, et un dispositif de commande de ce moteur qui comporte des moyens générateurs de signaux (110, 111) pour produire des signaux à la fréquence d'entraînement du moteur, un circuit formateur d'impulsions (112) couplé auxdits moyens générateurs de signaux pour fournir des impulsions de commande normales et un circuit de commande pour délivrer normalement à la bobine du moteur, en réponse auxdites impulsions de commande normale et à un signal de commande de sens de rotation, des impulsions motrices normales bipolaires dans un ordre de succession correspondant au sens dans lequel le rotor du moteur doit tourner, caractérisé par le fait que le dispositif de commande comporte en outre des moyens (124, 125, 127) pour déterminer le sens de rotation du rotor qui comparent à un instant déterminé ($t_0$) après le début de chaque impulsion motrice normale la valeur du courant dans la bobine (16) à une valeur de seuil ($i_0$) et fournissent un signal (SC) représentatif du sens dans lequel ladite impulsion motrice tend à faire tourner le rotor (18), des moyens de comparaison (128-131) pour comparer le signal fourni par lesdits moyens de détermination du sens de rotation audit signal (S) de commande de sens de rotation et délivrer un signal de commande de correction lorsque le sens de rotation du rotor est incorrect et des moyens (114, 115, 132) répondant audit signal de commande de correction pour interrompre l'impulsion motrice normale et commander l'application au moteur d'une impulsion motrice de correction afin de faire tourner le rotor dans le sens imposé par le signal de commande de sens de rotation.

21. Ensemble moteur selon la revendication 20 caractérisé par le fait que le circuit de commande (117-123) est conçu pour que l'application d'une impulsion motrice de correction provoque l'inversion de l'ordre de succession des polarités pour les impulsions motrices normales suivantes.

22. Ensemble moteur selon la revendication 20 caractérisé par le fait que la comparaison entre la valeur du courant dans la bobine (16) à la valeur de seuil ($i_0$) a lieu avant que le rotor (18) ait quitté sa position de repos.

23. Ensemble moteur selon la revendication 20 caractérisé par le fait que les moyens pour déterminer le sens de rotation du rotor comportent une résistance de mesure (124) pour fournir une tension porportionnelle au courant dans la bobine (16), des moyens de commutation (125) répondant à des impulsions de test (T) pour brancher ladite résistance de mesure en série avec ladite bobine pendant la durée desdites impulsions de test et pour court-circuiter cette résistance en dehors desdites impulsions, et un comparateur (127) pour comparer ladite tension proportionnelle au courant à une tension de référence ($V_R$) proportionnelle à ladite valeur de seuil ($i_0$).

24. Ensemble moteur selon la revendication 20 caractérisé par le fait que les moyens pour interrompre l'impulsion motrice normale et commander l'application d'une impulsion motrice de correction comportent un circuit de porte (114-116) pour bloquer l'impulsion de commande normale (P) et transmettre au circuit de commande (117-123) une impulsion de commande de correction (PC) produite par le circuit formateur d'impulsions et retardée par rapport à ladite impulsion de commande normale.

**Claims**

1. A stepping motor having two directions of rotation, comprising a stator (11) formed with a central cavity (13) delimited by an inner wall (14), a coil (16) magnetically coupled to the stator for setting up therein a magnetic field in response to a drive pulse, a rotor (18) rotatably mounted about an axis (7) in said central cavity and including a permanent magnet (19, 30) having at least one pair of opposite magnetic poles defining a magnetization axis (A), and positioning means ($20_a$, $20_b$; $22_a$, $22_b$) for providing the rotor with two rest positions wherein said magnetization axis is directed along a static equilibrium axis (YY'), the stator (11) comprising first and second opposite polar portions ($11_a$, $11_b$) partly surrounding the rotor (18), characterized in that said polar portions (11a, 11b) are connected to each other on opposite sides of said rotor by a first intermediate portion ($21_a$) and first and second connection portions ($12_a$, $12_b$) between said first intermediate portion and respectively said second and first polar portions and by a second intermediate portion ($21_b$) and third and fourth connection portions ($12_c$, $12_d$) between said second intermediate portion and respectively said first and second polar portions ; in that said positioning means ($20_a$, $20_b$; $22_a$, $22_b$) are provided whereby said static equilibrium axis (YY') intersects said intermediate portions; and that said connection portions ($12_a$, $12_b$, $12_c$, $12_d$) are so designed that two of them at least, joining said first and second intermediate portions respectively to one and to the other of said polar portions, have a permeability which drops between the instant when a drive pulse is applied to the coil (16) and that when the rotor starts to rotate.

2. A stepping motor according to claim 1, characterized in that said first and third connection portions ($12_a$, $12_c$), respectively said second and fourth connection portions ($12_b$, $12_d$) lie substantially symmetricaly in relation to the rotational axis (Z) of the rotor (18) in a direction (VV' and WW' respectively) that is inclined with respect to said static equilibrium axis (YY') by an angle ($\alpha$ and $\beta$ respectively) lying between 30° and 60° in a direction corresponding to first (D) and second directions of rotation respectively of the rotor.

3. A stepping motor according to claim 2, characterized in that the directions (VV', WW') in which said connection portions ($12_a$, $12_d$) lie each forms an angle of substantially 40° with said static equilibrium axis.

4. A stepping motor according to claim 2 or 3, characterized in that said connection portions ($12_a$-$12_d$) are so designed that said first ($12_a$) and third ($12_c$) connection portions become saturated with magnetic flux and their permeability thus practically reaches that of a vacuum, when the coil (16) generates in the stator (11), in response to a drive pulse, a magnetic field able to cause the rotor (18) to rotate in said first direction of rotation (D).

5. A stepping motor according to claim 4, characterized in that said connection portions ($12_a$-$12_d$) are provided such that said second ($12_b$) and fourth ($12_d$) connection portions become saturated with magnetic flux when the coil (16) generates in the stator (11) a magnetic field able to cause the rotor (18) to rotate in said second direction of rotation.

6. A stepping motor according to claim 5, characterized in that said connection portions ($12_a$-$12_d$) are such that saturation of the first ($12_a$) and of the third ($12_c$) when the rotor (18) is being caused to rotate in said first direction (D) should be faster than that of the second ($12_b$) and of the fourth ($12_d$) when the rotor is being caused to rotate in said second direction.

7. A stepping motor according to claim 4, characterized in that said connection portions ($12_a$-$12_d$) are provided such that said first ($12_a$) and third ($12_c$) connection portions become equally saturated with magnetic flux when the magnetic field generated by the coil (16) is able to cause the rotor (18) to rotate in said second direction of rotation.

8. A stepping motor according to claim 8, characterized in that the stator (11) consists of a single part of approximately constant thickness made up of a material having high magnetic permeability, and in that said first and third connection portions ($12_a$, $12_c$) consist of neck-like portions having substantially the same width (1).

9. A stepping motor according to claim 8, characterized in that said second and fourth connection portions ($12_b$, $12_d$) also consist of neck-like portions.

10. A stepping motor according to claim 9, characterized in that the neck-like portions forming said second and fourth connection portions ($12_b$, $12_d$) have a width (l') substantially equal to that (l) of the neck-like portions forming said first and third connection portions ($12_a$, $12_c$).

11. A stepping motor according to claim 9, characterized in that the neck-like portions forming said second and fourth connection portions ($12_b$, $12_d$) have a width (l') ranging from twice to four times that (l) of the neck-like portions forming said first and third connection portions ($12_a$, $12_c$).

12. A stepping motor according to claim 11, characterized in that the width (l') of the neck-like portions forming the second and fourth connection portions ($12_b$, $12_d$) is substantially three times that (l) of the neck-like portions forming the first and third connection portions ($12_a$, $12_c$).

13. A stepping motor according to claim 8, characterized in that, on the one hand, the first intermediate portion ($21_a$) and the second connection portion ($12_b$) and, on the other hand, the second intermediate portion ($21_b$) and the fourth connection portion ($12_d$) are so made as to form two stator portions having an approximately constant width ranging between twice and four times that of the neck-like portions forming the first and third connection portions ($12_a$, $12_c$).

14. A stepping motor according to claim 8, characterized in that, on the one hand, the first intermediate portion ($21_a$) and the second connection portion ($12_b$) and, on the other hand, the second intermediate portion ($21_b$) and the fourth connection portion ($12_d$) are so made as to form two stator portions having a width which increases in uniform manner form the neck-like portions forming the first and third connection portions ($12_a$, $12_c$) and which remains within twice to four times that of said neck-like portions.

15. A stepping motor according to any preceding claim, characterized in that said central cavity (13) is essentially of circular cross-section having an axis coinciding with the rotational axis (Z) of the rotor.

16. A stepping motor according to claim 15, characterized in that said positioning means include two diametrically opposite and substantially parallel flat surfaces ($20_a$, $20_b$) provided on said inner wall (14) of the stator (11), said static equilibrium axis (YY') being approximately perpendicular to these flat surfaces.

17. A stepping motor according to claim 15, characterized in that said positioning means include two diametrically opposite notches ($22_a$, $22_b$) provided in said inner wall (14) of the stator (11), said static equilibrium axis (YY') being approximately perpendicular to a straight line joining these notches.

18. A stepping motor according to any preceding claim, characterized in that said permanent magnet (19) is of circular cross-section and magnetized diametrically.

19. A stepping motor according to any one of claims 1 to 17, characterized in that said permanent magnet (30) is a bar magnetized along its longitudinal axis.

20. A motor unit comprising a stepping motor according to claim 6, 7, 11, 13 or 14, and a device for controlling said motor which includes signal generating means (110, 111) for producing signals at the driving frequency of the motor, a pulse forming circuit (112) coupled to said signal generating means to provide normal control pulses (P) and a control circuit (117-123) for normally supplying to the coil of the motor, in response to said normal control pulses and to a signal (S) for controlling the direction of rotation, normal bi-polar drive signals in an order of succession corresponding to the direction in which the rotor of the motor is required to rotate, characterized in that the control device further includes means (124, 125, 127) for determining the direction of rotation of the rotor which compare at a set instant ($t_0$) after the start of each normal drive pulse the value of the current in the coil (16) with a threshold value ($i_0$) and which provide a signal (SC) representative of the direction in which said drive pulse tends to cause the rotor (18) to rotate, comparing means (128-131) for comparing the signal supplied by said means for determining the direction of rotation with said signal (S) for controlling the direction of rotation and for supplying a corrective control signal when the direction of rotation of the rotor is incorrect, and means (114, 115, 132) responsive to said corrective control signal for interrupting the normal drive pulse and controlling the application to the motor of a corrective drive pulse such as to cause the rotor to rotate in the direction imposed by the signal for controlling the direction of rotation.

21. A motor unit according to claim 20, characterized in that the control circuit (117-123) is designed whereby the application of a corrective drive pulse causes the order of succession of the polarities to be reversed for the subsequent normal drive pulses.

22. A motor unit according to claim 20, characterized in that the comparison between the value of the current in the coil (16) with the threshold value ($i_0$) takes place before the rotor (18) leaves its position of rest.

23. A motor unit according to claim 20, characterized in that the means for determining the direction of the rotation of the rotor include a measurement resistance (124) for supplying a voltage proportional to the current in the coil (16), switch means (125) responsive to test pulses (T) for connecting said measurement resistance in series with said coil for the duration of said test pulses and for short-circuiting said resistance at times other than during said pulses, and a comparator (127) for comparing said voltage proportional to the current with a reference voltage (R) proportional to said threshold value ($i_0$).

24. A motor unit according to claim 20, characterized in that the means for interrupting the normal drive pulse and controlling the application of a corrective drive pulse include a gating circuit (114-116) for blocking the normal control pulse (P) and transmitting to the control circuit (117-123) the corrective control pulse (PC) produced by the pulse forming circuit and delayed in relation to said normal control pulse.

**Patentansprüche**

1. Schrittmotor mit zwei Drehrichtungen, umfassend einen Stator (11), in den eine zentrale Ausnehmung (13) eingearbeitet ist, begrenzt durch eine Innenwandung (14), eine magnetisch mit dem Stator gekoppelte Spule zum Erzeugen eines Magnetfeldes in diesem im Ansprechen auf einen Antriebsimpuls, einen um eine Achse (7) in der Zentralausnehmung drehbar angeordneten Rotor (18) mit einem Permanentmagneten (19), der mindestens ein Paar von einander gegenüberliegenden Magnetpolen besitzt, die eine Magnetisierungsachse (A) definieren, und Positioniermitteln zum Sicherstellen von zwei Rotorruhepositionen, in denen die genannte Magnetisierungsachse in einer Achse statischen Gleichgewichts (YY') gerichtet ist, wobei der Stator (11) eine erste und eine zweite Polpartie ($11_a$, $11_b$) einander gegenüber aufweist, welche teilweise den Rotor (18) umfassen, dadurch gekennzeichnet, daß diese Polpartien ($11_a$, $11_b$) mit einander beidseits des genannten Rotors über eine erste Zwischenpartie ($21_a$) und eine erste und eine zweite Verbindungspartie ($12_a$, $12_b$) zwischen der genannten ersten Zwischenpartie und der zweiten bzw. ersten Polpartie sowie mittels einer zweiten Zwischenpartie ($21_b$) und einer dritten und einer vierten Verbindungspartie ($12_c$, $12_d$) zwischen der genannten zweiten Zwischenpartie und der genannten ersten bzw. zweiten Polpartie verbunden sind, daß die ganannten Positioniermittel ($20_a$, $20_b$, $22_a$, $22_b$) derart vorgesehen sind, daß die genannte Achse statischen Gleichgewichts (YY') die genannten Zwischenpartien schneidet und daß die genannten Verbindungspartien derart konzipiert sind, daß mindestens zwei von ihnen, welche die erste und die zweite Zwischenpartie mit der einen bzw. anderen der genannten Polpartien verbindet, ihre Permebilität besitzen, welche zwischen dem Zeitpunkt, wo ein Antriebsimpuls an die Spule (16) angelegt ist und demjenigen, wo der Rotor zu drehen beginnt, abfällt.

2. Schrittmotor gemäß Anspruch 1, gekennzeichnet durch die Tatsache, daß die genannten ersten und dritten Verbindungspartien ($12_a$, $12_c$) bzw. die genannten zweiten und vierten Verbindungspartien ($12_b$, $12_d$) im wesentlichen symmetrisch bezüglich der Drehachse (Z) des Rotors (18) in einer Richtung (VV' bzw. WW') angeordnet sind, geneigt bezüglich der genannten Achse statischen Gleichgewichts um einen Winkel ($\alpha$ bzw. $\beta$) zwischen 30° und 60° in einer Richtung entsprechend einer ersten bzw. einer zweiten Rotordrehrichtung.

3. Schrittmotor gemäß Anspruch 2, gekennzeichnet durch die Tatsache, daß jede der Richtungen (VV', WW'), in denen die genannten Verbindungspartien ($12_a$-$12_d$) angeordnet sind, mit der genannten Achse statischen Gleichgewichts einen Winkel von im wesentlichen gleich 40° bilden.

4. Schrittmotor gemäß Anspruch 2 oder 3, gekennzeichnet durch die Tatsache, daß die genannten Verbindungspartien ($12_a$-$12_d$) derart konzipiert sind, daß die erste ($12_a$) und die dritte ($12_c$) von ihnen magnetflußgesättigt sind und ihre Permeabilität demgemäß praktisch diejenige des Vakuums erreicht, sobald die Spule (16) in dem Stator (11) im Ansprechen auf einen Antriebsimpuls ein Magnetfeld erzeugt, das die Rotordrehung (18) in der genannten ersten Drehrichtung (D) ermöglicht.

5. Schrittmotor gemäß Anspruch 4, gekennzeichnet durch die Tatsache, daß die genannten Verbindungspartien ($12_a$-$12_d$) derart vorgesehen sind, daß die zweite ($12_b$) und die vierte ($12_d$) von ihnen magnetflußgesättigt sind, sobald die Spule (16) in dem Stator (11) ein Magnetfeld erzeugt, das die Drehung des Rotors in der genannten zweiten Drehrichtung ermöglicht.

6. Schrittmotor gemäß Anspruch 5, gekennzeichnet durch die Tatsache, daß die genannten Verbindungspartien ($12_a$-$12_d$) derart sind, daß die Sättigung der ersten ($12_a$) und der dritten ($12_c$) im Falle einer Drehung der Rotors (18) in der ersten Richtung (D) schneller erfolgt als diejenige der zweiten ($12_b$) und der vierten ($12_d$), wenn der Rotor zum Antrieb in der zweiten Drehrichtung angeregt wird.

7. Schrittmotor gemäß Anspruch 4, gekennzeichnet durch die Tatsache, daß die genannten Verbindungspartien ($12_a$-$12_d$) derart vorgesehen sind, daß die erste ($12_a$) und die dritte ($12_c$) gleichermaßen magnetflußgesättigt sind, wenn das von der Spule (16) erzeugte Magnetfeld die Drehung des Rotors (18) in der genannten zweiten Drehrichtung ermöglicht.

8. Schrittmotor gemäß Anspruch 4, gekennzeichnet durch die Tatsache, daß der Stator (11) in einem einzigen Werkstück weitgehend konstanter Dicke realisiert ist aus einem Material hoher magnetischer Permeabilität und daß die genannten ersten und dritten Verbindungspartien ($12_a$, $12_c$) durch Einschnürungen im wesentlichen gleicher Breite (I) gebildet sind.

9. Schrittmotor gemäß Anspruch 8, gekennzeichnet durch die Tatsache, daß die genannten zweiten und vierten Verbindungspartien ($12_b$, $12_d$) ebenfalls durch Einschnürungen gebildet sind.

10. Schrittmotor gemäß Anspruch 9, gekennzeichnet durch die Tatsache, daß die Einschnürungen, welche die genannten ersten und vierten Verbindungspartien ($12_b$, $12_d$) bilden, eine Breite (I') aufweisen, im wesentlichen gleich der der Einschnürungen, welche die erste und dritte Verbindungspartie ($12_a$, $12_c$) bilden.

11. Schrittmotor gemäß Anspruch 9, gekennzeichnet durch die Tatsache, daß die Einschnürungen, welche die genannten zweiten und vierten Verbindungspartien ($12_b$, $12_d$) bilden, eine Breite (I') zwischen dem Zweifachen und dem Vierfachen derjenigen (I) der Einschnürungen aufweisen, welche die genannten ersten und dritten Verbindungspartien ($12_a$, $12_c$) bilden.

12. Schrittmotor gemäß Anspruch 11, gekennzeichnet durch die Tatsache, daß die Breite (I') der Einschnürungen, welche die zweiten und

vierten Verbindungspartien (12b, 12d) bilden, im wesentlichen gleich dem Dreifachen derjenigen (I) der Einschnürungen ist, welche die ersten und dritten Verbindungspartien (12a, 12c) bilden.

13. Schrittmotor gemäß Anspruch 8, gekennzeichnet durch die Tatsache, daß einerseits die erste Zwischenpartie (21a) und die zweite Verbindungspartie (12b) und andererseits die zweite Zwischenpartie (21b) und die vierte Verbindungspartie (12d) derart realisiert sind, daß sie zwei Statorabschnitte mit einer annähernd konstanten Breite bilden, die zwischen dem Zweifachen und dem Vierfachen derjenigen der Einschnürungen liegt, welche die ersten und dritten Verbindungspartien (12a, 12c) bilden.

14. Schrittmotor gemäß Anspruch 8, gekennzeichnet durch die Tatsache, daß einerseits die erste Zwischenpartie (21a) und die zweite Verbindungspartie (12b) und andererseits die zweite Zwischenpartie (21b) und die vierte Verbindungspartie (12d) derart realisiert sind, daß sie zwei Statorabschnitte mit einer Breite bilden, die annähernd gleichförmig zunimmt, ausgehend von den Einschnürungen, welche die erste und dritte Verbindungspartie (12a, 12c) bilden und bei einem Wert bleibt, der zwischen dem Zweifachen und Vierfachen derjenigen der genannten Einschnürungen liegt.

15. Schrittmotor gemäß einem der vorangehenden Ansprüche, gekennzeichnet durch die Tatsache, daß die genannten Zentralausnehmung (13) im wesentlichen die Form eines Umlaufzylinders besitzt mit einer Achse, die mit der Umlaufachse (Z) des Rotors zusammenfällt.

16. Schrittmotor gemäß Anspruch 15, gekennzeichnet durch die Tatsache, daß die genannten Positioniermittel zwei Abflachungen (20a, 20b) umfassen, die einander diametral gegenüberliegend und im wesentlichen parallel an der genannten Innenwandung (14) des Stators (11) vorgesehen sind, wobei die Achse statischen Gleichgewichts (YY') etwa senkrecht zu diesen Abflachungen ist.

17. Schrittmotor gemäß Anspruch 15, gekennzeichnet durch die Tatsache, daß die genannten Positioniermittel zwei einander diametral gegenüberliegende Einbuchtungen (22a, 22b) umfassen, vorgesehen in der genannten Innenwandung (14) des Stators (11), wobei die Achse statischen Gleichgewichts (YY') etwa senkrecht zu einer Geraden liegt, die diese Einbuchtungen verbindet.

18. Schrittmotor gemäß einem der vorangehenden Ansprüche, gekennzeichnet durch die Tatsache, daß der genannte Permanentmagnet (19) in Form eines diametral magnetisierten Umlaufzylinders realisiert ist.

19. Schrittmotor gemäß einem der Ansprüche 1 bis 17, gekennzeichnet durch die Tatsache, daß der genannte Permanentmagnet (30) in Form eines in Richtung seiner Längsachse magnetisierten Stabes realisiert ist.

20. Motorbaugruppe mit einem Schrittmotor nach Anspruch 6, 7, 11, 13 oder 14 und einer Steuereinrichtung für diesen Motor, welche Signalerzeugungsmittel (110, 111) umfaßt, zum Erzeugen von Signalen mit der Antriebsfrequenz des Motors, einen Pulsformerkreis (112), angekoppelt an die genannten Signalerzeugungsmittel zum Liefern von Normalsteuerimpulsen und einen Steuerkreis zum Übertragen an die Spule des Motors im Ansprechen auf die genannten Normalsteuerimpulse und ein Drehrichtungssteuersignal von — normalerweise — bipolaren Normalantriebsimpulsen in einer Abfolge entsprechend der Richtung, in der der Rotor des Motors drehen muß, gekennzeichnet durch die Tatsache, daß die Steuereinrichtung ferner Mittel (124, 125, 127) zum Bestimmen der Rotordrehrichtung umfaßt, welche in einem vorgegebenen Zeitpunkt (t0) nach dem Beginn des Normalantriebimpulses den Wert des Stromes in der Spule (16) mit einem Schwellwert (i0) vergleichen und ein Signal (SC) liefern, das repräsentativ ist für die Richtung, in der der genannte Antriebsimpuls den Rotor (18) zu drehen tendiert, Vergleichsmittel (128-131) zum Vergleichen des von den genannten Drehrichtungsbestimmungsmitteln gelieferten Signals mit dem genannten Signal (S) für die Steuerung der Drehrichtung und zum Übertragen eines Korrekturkommandosignals, sobald die Drehrichtung des Rotors inkorrekt ist, sowie Mittel (114, 115, 132), ansprechend auf das genannte Korrekturkommandosignal zum Unterbrechen des Normalantriebsimpulses und zum Steuern des Anlegens eines Korrekturantriebsimpulses an den Motor, um den Rotor in einer Richtung drehen zu lassen, die durch das Drehrichtungskommandosignal vorgegeben ist.

21. Motorbaugruppe gemäß Anspruch 20, gekennzeichnet durch die Tatsache, daß der Steuerkreis (117-123) derart konzipiert ist, daß das Anlegen eines Korrekturantriebsimpulses die Inversion der Polaritätenabfolge für die folgenden Normalantriebsimpulse bewirkt.

22. Motorbaugruppe gemäß Anspruch 20, gekennzeichnet durch die Tatsache, daß der Vergleich zwischen dem Wert des Stromes in der Spule (16) und dem Schwellenwert (i0) erfolgt, bevor der Rotor (18) seine Ruheposition verlassen hat.

23. Motorbaugruppe gemäß Anspruch 20, gekennzeichnet durch die Tatsache, daß die Mittel zum Bestimmen der Rotordrehrichtung einem Meßwiderstand (124) umfasen, zum Liefern einer Spannung proportional dem Strom in der Spule (16), Umschaltmittel (125), die auf Testimpulse (T) ansprechen, zum Schalten des genannten Meßwiderstandes in Serie mit der genannten Spule während der Dauer der genannten Testimpulse und zum Kurzschließen dieses Widerstandes außerhalb der genannten Impulse sowie einen Komparator (127) zum Vergleichen der genannten dem Strom proportionalen Spannung mit einer Bezugsspannung (VR), proportional dem genannten Schwellenwert (i0).

24. Motorbaugruppe gemäß Anspruch 20, gekennzeichnet durch die Tatsache, daß die Mittel zum Unterbrechen des Normalantriebsimpulses und zum Steuern des Anlegens eines Korrekturantriebsimpulses einen Gatterkreis (114-116) umfassen zum Sperren des Normalsteuerimpulses (P) und zum Übertragen zu dem Steuerkreis (117-123) eines Korrekturkommandoimpulses (PC), erzeugt von dem Impulsformerkreis und verzögert gegenüber dem genannten Normalsteuerimpuls.

Fig. 1

Fig. 2

Fig.3

Fig. 4

Fig. 5

Fig. 6a

Fig. 6b

Fig.7

Fig.8

Changement de sens
de rotation

Fig.9

Fig.10

Fig. 11a

Fig. 11b

6

Fig.12

Fig.13

Fig.14

Fig.15

Fig.16

Fig. 17